# EUROPEAN PATENT APPLICATION

(11) **EP 4 012 245 A1**
(43) Date of publication of application: **15.06.2022**
(21) Application number: 19941758.5
(22) Date of filing: 13.08.2019
(51) Int. Cl.: F16M 11/12, B64D 47/08

(54) **HANDHELD GIMBAL, GIMBAL CONTROL METHOD, AND COMPUTER READABLE STORAGE MEDIUM**

(71) Applicant: SZ DJI Technology Co., Ltd., Shenzhen, Guangdong 518057 (CN)
(72) Inventor: LIU, Shuai, Shenzhen, Guangdong 518057 (CN); CHANG, Xianmao, Shenzhen, Guangdong 518057 (CN)
(74) Representative: Appelt, Christian W.
(86) International application number: PCT/CN2019/100463
(87) International publication number: WO 2021/026790

(57) **Abstract**

The present disclosure provides a handheld gimbal, a gimbal control method, and a computer-readable storage medium. The handheld gimbal includes a handle part 101, a first bracket 102, and a first motor 105. A plurality of use modes of the handheld gimbal 100 correspond to a plurality of attitudes of the first bracket 102. The first motor 105 is installed on the first bracket 102, and the first motor 105 drives the first bracket 102 to rotate, thereby realizing the switching of the handheld gimbal between the plurality of use modes. The present disclosure improves the shooting convenience of the handheld gimbal.

## Description

### TECHNICAL FIELD

The present disclosure relates to the technical field of gimbal control and, more specifically, to a handheld gimbal, a gimbal control method, and a computer-readable storage medium.

### BACKGROUND

A handheld gimbal is small and easy to carry. A handheld gimbal can be equipped with a small shooting device, such as a video camera, camera, smart phone, etc. and can achieve the effect of quickly and steadily controlling the shooting device to maintain a certain attitude when shooting while moving around. In order to obtain a good viewfinder image, the attitude of the gimbal generally needs to be controlled when shooting with the gimbal. The inventor noticed that users need to use the handheld gimbal for shooting in a variety of shooting modes in a variety of scenarios, and the user need to ensure the stability and clarity of the captured images, and the convenience of operation. For example, a user may need to shoot in scenes in a vertical direction, an inverted direction, or outside a car window.

### SUMMARY

Based on this, the present disclosure provides a handheld gimbal, a gimbal control method, and a computer-readable storage medium to improve the shooting convenience of the handheld gimbal.

In a first aspect, the present disclosure provides a handheld gimbal. The handheld gimbal includes a handle part, a first bracket, a second bracket, a third bracket, a first motor, a second motor, and a third motor. The handheld gimbal includes a plurality of use modes, and the plurality of use modes correspond to a plurality of attitudes of the first bracket. The first bracket is used to mount a payload, the second bracket is connected between the first bracket and the third bracket, and the third bracket is used to connect with the handle part. The first motor is installed on the first bracket to connect the first bracket and the second bracket, and the first motor is configured to drive the first bracket to rotate for the handheld gimbal to switch between the plurality of use modes. The second motor is used to connect the second bracket and the third bracket to drive the second bracket to rotate, and the third motor is used to connect the third bracket and the handle part to drive the third bracket to rotate. When the handle part is substantially in a vertical state, the handle part is tilted counterclockwise or clockwise to rotate the handle part around a roll axis, and the first motor is configured to follow the handle part to rotate to drive the first bracket to rotate around the roll axis; and/or when the handle part is substantially in a horizontal state, the handle part is tilted counterclockwise or clockwise to rotate the handle part around a yaw axis, and the first motor is configured to follow the handle part to rotate to drive the first bracket to rotate around the yaw axis.

In a second aspect, the present disclosure provides a gimbal control method that can be applied to a handheld gimbal. The handheld gimbal includes a handle part, a first bracket, a second bracket, a third bracket, a first motor, a second motor, and a third motor. The handheld gimbal includes a plurality of use modes, and the plurality of use modes respectively correspond to a plurality of attitudes of the first bracket. The first bracket is configured to mount a payload, the second bracket is connected between the first bracket and the third bracket, and the third bracket is connected with the handle part. The first motor is installed on the first bracket to connect the first bracket and the second bracket to drive the first bracket to rotate for the handheld gimbal to switch between the plurality of use modes. The second motor is used to connect the second bracket and the third bracket to drive the second bracket to rotate. The third motor is used to connect the third bracket and the handle part to drive the third bracket to rotate. When the handle part is substantially in a vertical state, the handle part is configured to tilt counterclockwise or clockwise to rotate the handle part around a roll axis, and the first motor is configured to follow the handle part to rotate to drive the first bracket to rotate around the roll axis; and/or when the handle part is substantially in a horizontal state, the handle part is configured to tilt counterclockwise or clockwise to rotate the handle part around a yaw axis, and the first motor is configured to follow the handle part to rotate to drive the first bracket to rotate around the yaw axis. The method includes determining a to-be-followed object of the first bracket based on a current use mode of the handheld gimbal, where an attitude of the first bracket changes following a change of an attitude of the to-be-followed object; determining an expected attitude angle of the first bracket based on a current attitude angle of the to-be-followed object if the attitude of the to-be-followed object changes; and adjusting an attitude angle of the first bracket until the adjusted attitude angle of the first bracket is the expected attitude angle based on a current attitude angle and the expected attitude angle of the first bracket.

In a third aspect, the present disclosure further provides a handheld gimbal. The handheld gimbal includes a handle part, a first bracket, a second bracket, a third bracket, a first motor, a second motor, a third motor, and at least one controller. The handheld gimbal includes a plurality of use modes, and the plurality of use modes respectively corresponding to a plurality of attitudes of the first bracket. The first bracket is configured to mount a payload, the second bracket is connected between the first bracket and the third bracket, and the third bracket is connected with the handle part. The first motor is installed on the first bracket to connect the first bracket and the second bracket to drive the first bracket to rotate for the handheld gimbal to switch between the plurality of use modes. The second motor is used to connect the second bracket and the third bracket to drive the second bracket to rotate. The third motor is used to connect the third bracket and the handle part to drive the third bracket to rotate. When the handle part is substantially in a vertical state, the handle part is configured to tilt counterclockwise or clockwise to rotate the handle part around a roll axis, and the first motor is configured to follow the handle part to rotate to drive the first bracket to rotate around the roll axis; and/or when the handle part is substantially in a horizontal state, the handle part is configured to tilt counterclockwise or clockwise to rotate the handle part around a yaw axis, and the first motor being configured to follow the handle part to rotate to drive the first bracket to rotate around the yaw axis. The controller is configured to determine a to-be-followed object of the first bracket based on a current use mode of the handheld gimbal, where an attitude of the first bracket changes following a change of an attitude of the to-be-followed object, determine an expected attitude angle of the first bracket based on a current attitude angle of the to-be-followed object if the attitude of the to-be-followed object changes, and adjust an attitude angle of the first bracket until the adjusted attitude angle of the first bracket is the expected attitude angle based on a current attitude angle and the expected attitude angle of the first bracket.

In a fourth aspect, the present disclosure further provides a computer-readable storage medium. The computer-readable storage medium stores a computer program. When the computer program is executed by a processor, the processor can realize the steps of the gimbal control method described above.

The embodiments of the present disclosure provide a gimbal control method, a handheld gimbal, and a computer-readable storage medium. By installing a first motor on the first bracket, the first motor can drive the first bracket to rotate, such that the handheld gimbal can be switched between a plurality of use modes, which can effectively improve the shooting convenience of the handheld gimbal.

It should be understood that the above general description and the following detailed description are merely exemplary and explanatory, and are not limiting of the present disclosure.

### BRIEF DESCRIPTION OF THE DRAWINGS

To more clearly illustrate the technical solutions in the embodiments of the present disclosure, the drawings used in the description of the embodiments will be briefly described below. It is obvious that the drawings in the following description are only some embodiments of the present disclosure. For those having ordinary skills in the art, other drawings can be obtained according to these drawings without inventive efforts.
FIG. 1 is a schematic structural diagram of a handheld gimbal according to of an embodiment of the present disclosure.
FIG. 2 is a schematic diagram of the handheld gimbal in a first use mode according to an embodiment of the present disclosure.
FIG. 3 is a schematic diagram of the handheld gimbal in a second use mode according to an embodiment of the present disclosure.
FIG. 4 is a schematic diagram of the handheld gimbal in a third use mode according to an embodiment of the present disclosure.
FIG. 5 is a schematic diagram of the handheld gimbal in a fourth use mode according to an embodiment of the present disclosure.
FIG. 6 is a schematic diagram of the handheld gimbal in a fifth use mode according to an embodiment of the present disclosure.
FIG. 7 is a schematic diagram of the handheld gimbal in a sixth use mode according to an embodiment of the present disclosure.
FIG. 8 is a schematic diagram of the handheld gimbal in a seventh use mode according to an embodiment of the present disclosure.
FIG. 9 is a schematic diagram of the handheld gimbal in an eighth use mode according to an embodiment of the present disclosure.
FIG. 10 is a schematic diagram of the handheld gimbal in a nineth use mode according to an embodiment of the present disclosure.
FIG. 11 is a schematic diagram of the handheld gimbal in a tenth use mode according to an embodiment of the present disclosure.
FIG. 12 is a schematic diagram of the handheld gimbal in an eleventh use mode according to an embodiment of the present disclosure.
FIG. 13 is a schematic diagram of the handheld gimbal in a twelfth use mode according to an embodiment of the present disclosure.
FIG. 14 is a schematic diagram of the handheld gimbal in a thirteenth use mode according to an embodiment of the present disclosure.
FIG. 15 is a flowchart of switching the use mode of the handheld gimbal according to an embodiment of the present disclosure.
FIG. 16 is a schematic diagram of switching between the use modes of the handheld gimbal according to an embodiment of the present disclosure.
FIG. 17 is another schematic diagram of switching between the use modes of the handheld gimbal according to an embodiment of the present disclosure.
FIG. 18 is another schematic diagram of switching between the use modes of the handheld gimbal according to an embodiment of the present disclosure.
FIG. 19 is another schematic diagram of switching between the use modes of the handheld gimbal according to an embodiment of the present disclosure.
FIG. 20 is another schematic diagram of switching between the use modes of the handheld gimbal according to an embodiment of the present disclosure.
FIG. 21 is another schematic diagram of switching between the use modes of the handheld gimbal according to an embodiment of the present disclosure.
FIG. 22 is another schematic diagram of switching between the use modes of the handheld gimbal according to an embodiment of the present disclosure.
FIG. 23 is another schematic diagram of switching between the use modes of the handheld gimbal according to an embodiment of the present disclosure.
FIG. 24 is another schematic diagram of switching between the use modes of the handheld gimbal according to an embodiment of the present disclosure.
FIG. 25 is another schematic diagram of switching between the use modes of the handheld gimbal according to an embodiment of the present disclosure.
FIG. 26 is a flowchart of a gimbal control method according to an embodiment of the present disclosure.
FIG. 27 is a schematic block diagram of the handheld gimbal according to an embodiment of the present disclosure.

### DETAILED DESCRIPTION OF THE EMBODIMENTS

Technical solutions in the embodiments of the present disclosure are described clearly and completely in the following with reference to the accompanying drawings in the embodiments of the present disclosure. It is obvious that the described embodiments are only a part of the embodiments of the present disclosure, but not all embodiments. On the basis of the embodiments of the present disclosure, all other embodiments conceived without inventive efforts by those having ordinary skills in the art are within the scope of the present disclosure.

The flowcharts shown in the drawings are only for illustration, and are not necessary to include all the content and operations/steps. For example, some operations/steps can be divided, and some operations/steps can be merged or partially merged, so the order of actual execution may be changed according to actual situations.

Exemplary embodiments will be described with reference to the accompanying drawings. In the case where there is no conflict between the exemplary embodiments, the features of the following embodiments and examples may be combined with each other.

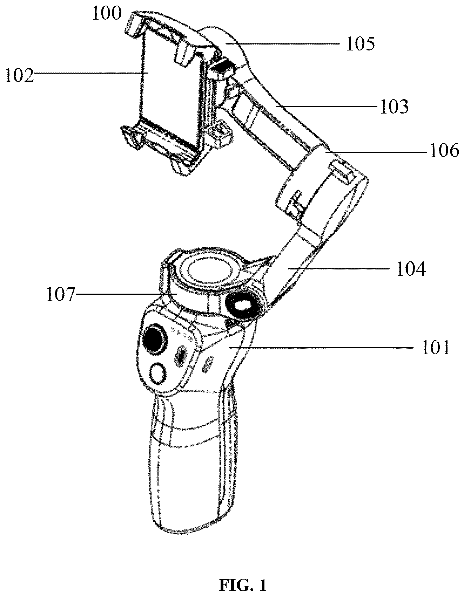

As shown in FIG. 1, an embodiment of the present disclosure provides a handheld gimbal 100, which includes a handle part 101, a first bracket 102, a second bracket 103, a third bracket 104, a first motor 105, a second motor 106, and a third motor 107. The handle part 101 may include a plurality of use modes, and the plurality of use modes may correspond to a plurality of attitudes of the first bracket 102 respectively. Different use modes may correspond to different attitude, which is convenient for users to switch the handheld gimbal to a suitable use mode in a variety of use cases, which can improve the convenience of operation while ensuring the stability and clarity of the captured images.

In some embodiments, the first bracket 102 may be used to mount a payload, the second bracket 103 may be connected between the first bracket 102 and the third bracket 104, and the third bracket 104 may be used to connected with the handle part 101. The first motor 105 may be installed on the first bracket 102 and used to connect the first bracket 102 and the second bracket 103. The first motor 105 may drive the first bracket 102 to rotate to realize the switch between the plurality of use modes of the handheld gimbal 100. The second motor 106 may be used to connect the second bracket 103 and the third bracket 104 to drive the second bracket 103 to rotate, and the third motor 107 may be used to connect the third bracket 104 to the handle part 101 to drive the third bracket 104 to rotate. The handheld gimbal may be switched between a plurality of use modes, which is convenient for users to use appropriate use modes based on different use cases, which not only improves the convenience of operation, but also ensures the stability and clarity of the captured images.

In some embodiments, when the handle part 101 is substantially in a vertical state, tilting the handle part 101 counterclockwise or clockwise to rotate the handle part 101 around the roll axis may cause the first motor 105 to follow the handle part 101 to rotate to drive the first bracket 102 to rotate around the roll axis; and/or, when the handle part 101 is substantially in a horizontal state, tilting the handle part 101 counterclockwise or clockwise to rotate the handle part 101 around the yaw axis may cause the first motor 105 to follow the handle part 101 to rotate to drive the first bracket 102 to rotate around the yaw axis. Tilting the handle part 101 counterclockwise can be referred to rotating the handle counterclockwise in a direction perpendicular to the axis of the handle. The direction may be substantially parallel to the direction of the first bracket, and the way to tilt the handle part 101 counterclockwise may be to tilt the handle to the left. Tilting the handle part 101 clockwise can be referred to rotating the handle counterclockwise around the direction perpendicular to the axis of the handle. The direction may be substantially parallel to the direction of the first bracket, and the way to tilt the handle part 101 counterclockwise may be to tilt the handle to the right. When the handle part is tilted counterclockwise or clockwise, the bracket used to mount the payload may rotate with the handle part, which can ensure the stability and clarity of the captured image during the process of switching the use mode.

It should be understood that when the handle part 101 is substantially in the vertical state, that is, the current axis direction of the handle part 101 may be substantially parallel to the direction of gravity, that is, the angle that the current axis direction of the handle part 101 deviates from the direction of gravity within a preset deviating angle range. When the handle part 101 is substantially in the horizontal state, the current axis direction of the handle part 101 may be substantially perpendicular to the direction of gravity, that is, the angle that the current axis direction of the handle part 101 deviates from the horizontal direction may be within the preset deviating angle range. In some embodiments, the preset deviating angle range may be between 0° to 45°. Further, the preset deviating angle range may be between 0° to 5°.

The payload may be a control terminal, such as a shooting device, and the shooting device may be a smart phone, a camera, etc. In some embodiments, the first bracket 102 may also be integrated with the shooting device.

In one embodiment, the handheld gimbal 100 may be selected as a handheld gimbal with a non-orthogonal structure. The attitude of the handle part 101, the attitude of the first bracket 102, and/or the joint angles of the motors of the handheld gimbal 100 in different use modes may be different. In some embodiments, the motor may be the first motor 105, the second motor 106, and the third motor 107.

In one embodiment, one side of the second motor 106 may be installed on the second bracket 103, and the other side of the second motor 106 may be installed on the third bracket 104, such that the second motor 106 can drive the second bracket 103 to rotate. Further, one side of the third motor 107 may be installed on the third bracket 104, and the other side of the third motor 107 may be installed on the handle part 101, such that the third motor 107 can drive the third bracket 104 to rotate.

In some embodiments, the handheld gimbal 100 may also include a first attitude acquisition element, which may be an inertial measurement unit (IMU), such as at least one of an accelerometer or a gyroscope. The first attitude acquisition element may be disposed on the first bracket 102, and the first attitude acquisition element may be used to obtain attitude information of the first bracket 102. By disposing the attitude acquisition element on the first bracket, the attitude information of the first bracket can be obtained, and the attitude information of the handle part can be inversely calculated based on the attitude information of the first bracket, which can reduce the cost of the device.

In some embodiments, the handheld gimbal 100 may also include a second attitude acquisition element, which may be an inertial measurement unit (IMU), such as at least one of an accelerometer or a gyroscope. The second attitude acquisition element may be disposed on the handle part 101, and the second attitude acquisition element may be used to obtain the attitude information of the handle part 101. By disposing the attitude acquisition element on the first bracket and handle part, the attitude information of the first bracket and the handle part can be quickly obtained without going through the inverse calculation process.

In some embodiments, the plurality of use modes of the handheld gimbal may include at least one of the following use modes: a first use mode, a second use mode, a third use mode, a fourth use mode, a fifth use mode, a sixth use mode, a seventh use mode, an eighth use mode, a nineth use mode, a tenth use mode, an eleventh use mode, a twelfth use mode, a thirteenth use mode, a fourteenth use mode, a fifteenth use mode, and a sixteenth use mode.

In one embodiment, when the handheld gimbal 100 is in the first use mode, the handle part 101 may be substantially vertical state, the back of the first bracket 102 may face a first direction, the first direction may be substantially perpendicular to the current axis direction of the handle part 101, and the joint angles of the first motor 105, the second motor 106, and the third motor 107 may be all within a first preset joint angle range. In some embodiments, the current axis direction of the handle part 101 in a substantially vertical state may be substantially perpendicular to the horizon. That is, the angle at which the current axis direction of the handle part 101 deviates from the direction of gravity may be within the preset deviation angle range, and the bottom of the handle part 101 may face the ground. In some embodiments, the preset deviation angle range may be between 0° to 45°, the first direction may be substantially perpendicular to the current axis direction of the handle part 101, and the included angle between the first direction and the current axis direction of the handle part 101 may be between 45 ° to 135°. Further, the preset deviation angle range may be between 0° to 5°. Furthermore, the preset deviation angle range may be 0°, and the first direction may be substantially perpendicular to the current axis direction of the handle part 101, and the included angle between the first direction and the current axis direction of the handle part 101 may be 90°.

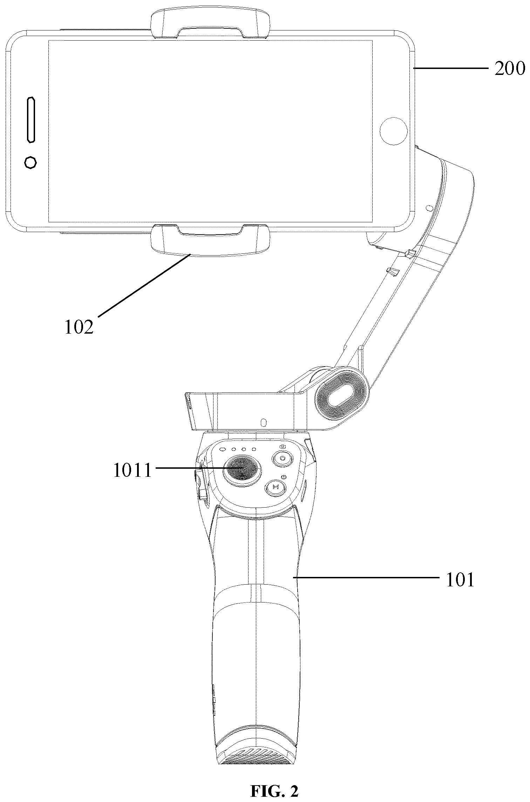

When the handheld gimbal is in the first use mode, it may be convenient for the user to switch the first use mode of the handheld gimbal to another use mode, which greatly improves the convenience of switching the use mode. Referring to FIG. 2, which is a schematic diagram of the handheld gimbal in the first use mode according to an embodiment of the present disclosure. As shown in FIG. 2, the handle part 101 is substantially in the vertical state. An operation control button 1011 is disposed on the handle part 101. A shooting device 200 is mounted on the first bracket 102, and the orientation of the operation control button 1011 is substantially the same as the orientation of the screen of the shooting device 200. The camera of the shooting device 200 is positioned on the left side of the first bracket 102.

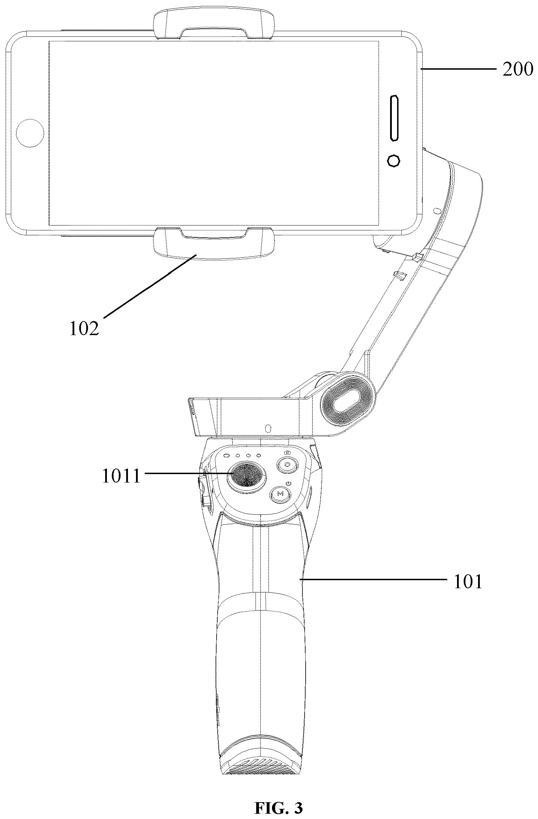

In one embodiment, when the handheld gimbal 100 is in the second use mode, the handle part 101 may be substantially in the vertical state, the back of the first bracket 102 may face the first direction, and the first direction may be substantially perpendicular to the current axis direction of the handle part 101. In addition, the joint angles of the second motor 106 and the third motor 107 of the handheld gimbal 100 may be both within the first preset joint angle range, and the joint angle of the first motor 105 may be within a second preset joint angle range. The handheld gimbal in the second use mode allows the shooting device to capture scenes that cannot be captured in other use modes, thereby increasing the shooting range of the shooting device. Referring to FIG. 3, which is a schematic diagram of the handheld gimbal in the second use mode according to an embodiment of the present disclosure. As shown in FIG. 3, the handle part 101 is substantially in a vertical state. An operation control button 1011 is disposed on the handle part 101. A shooting device 200 is mounted on the first bracket 102, and the orientation of the operation control button 1011 is substantially the same as the orientation of the screen of the shooting device 200. The camera of the shooting device 200 is positioned on the right side of the first bracket 102.

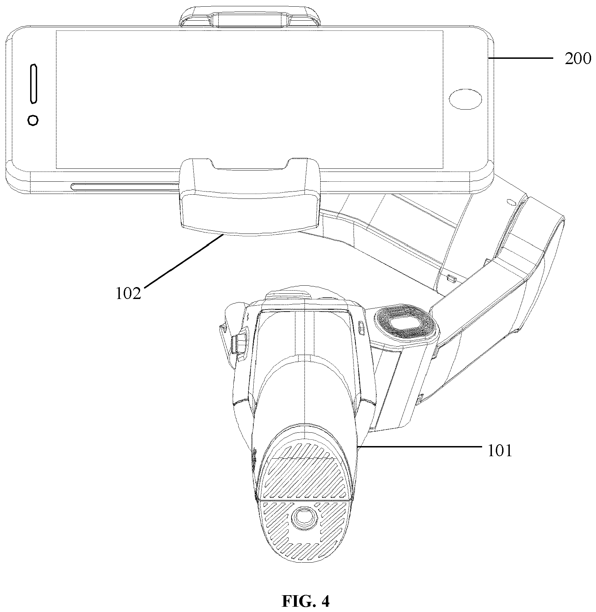

In one embodiment, when the handheld gimbal 100 is in the third use mode, the handle part 101 may be substantially in a horizontal state, and the back of the first bracket 102 may face a second direction. The second direction may be substantially perpendicular to the current axis direction of the handle part 101, and the joint angles of the first motor 105, the second motor 106, and the third motor 107 may be all within the first preset joint angle range. In some embodiments, the current axis direction of the handle part 101 in a substantially horizontal state may be parallel to the horizon. That is, the direction of the current axis direction of the handle part 101 deviates from the horizon may be within the preset deviation angle range, and the direction of the bottom of the handle part 101 may be substantially perpendicular to the direction of the back of the first bracket 102. In some embodiments, the preset deviation angle range may be between 0° to 45°, and the first direction may be substantially perpendicular to the current axis direction of the handle part 101, and the included angle between the first direction and the current axis direction of the handle part 101 may be between 45° to 135°. Further, the preset deviation angle range may be between 0° to 5°. Furthermore, the preset deviation angle range may be 0°, and the first direction may be substantially perpendicular to the current axis direction of the handle part 101, and the included angle between the first direction and the current axis direction of the handle part 101 may be 90°. Referring to FIG. 4, which is a schematic diagram of the handheld gimbal in the third use mode according to an embodiment of the present disclosure. As shown in FIG. 4, the handle part 101 is substantially in a horizontal state, a shooting device 200 is mounted on the first bracket 102, the screen of the shooting device 200 faces the sky, and the camera of the shooting device 200 is positioned on the left side of the first bracket 102.

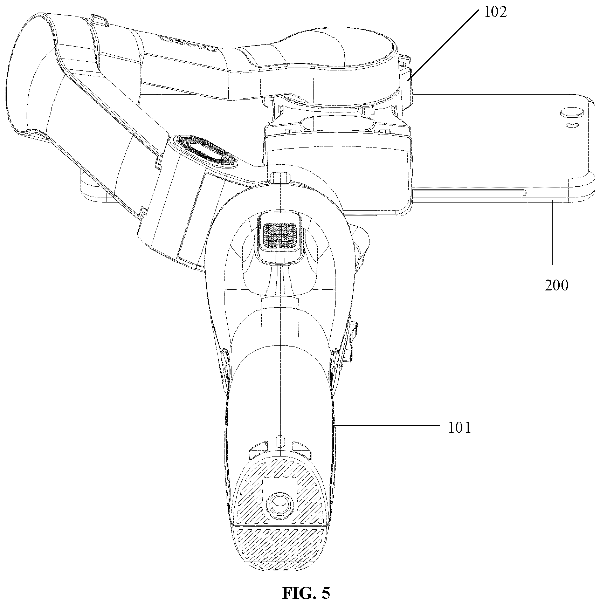

In one embodiment, when the handheld gimbal 100 is in the fourth use mode, the handle part 101 may be substantially in a horizontal state, and the back of the first bracket 102 may face a third direction. The third direction may be substantially perpendicular to the current axis direction of the handle part 101, the second direction may be substantially opposite to the third direction, and the joint angles of the first motor 105, the second motor 106, and the third motor 107 may be all within the first preset joint angle range. In some embodiments, the third direction may be substantially perpendicular to the current axis direction of the handle part 101, and the included angle between the third direction and the current axis direction of the handle part 101 may be between 85° to 95°. Referring to FIG. 5, which is a schematic diagram of the handheld gimbal in the fourth use mode according to an embodiment of the present disclosure. As shown in FIG. 5, the handle part 101 is substantially in a horizontal state, a shooting device 200 is mounted on the first bracket 102, the screen of the shooting device 200 faces the ground, and the camera of the shooting device 200 is positioned on the right side of the first bracket 102.

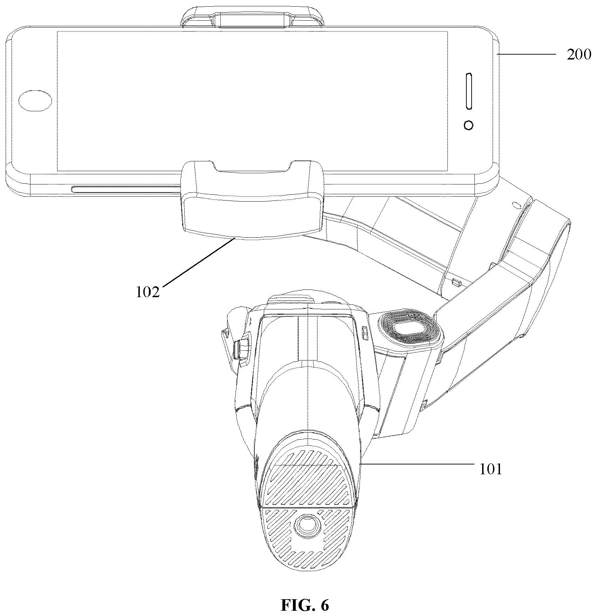

In one embodiment, when the handheld gimbal 100 is in the fifth use mode, the handle part 101 may be substantially in a horizontal state, and the back of the first bracket 102 may face the second direction. The second direction may be substantially perpendicular to the current axis direction of the handle part 101, the joint angles of the second motor 106 and the third motor 107 may be both within the first preset joint angle range, and the joint angle of the first motor 105 may be with the second preset joint angle range. Referring to FIG. 6, which is a schematic diagram of the handheld gimbal in the fifth use mode according to an embodiment of the present disclosure. As shown in FIG. 6, the handle part 101 is substantially in a horizontal state, a shooting device 200 is mounted on the first bracket 102, the screen of the shooting device 200 faces the sky, and the camera of the shooting device 200 is positioned on the right side of the first bracket 102. Compared with FIG. 4, the first bracket 102 is rotated 180° around the roll axis.

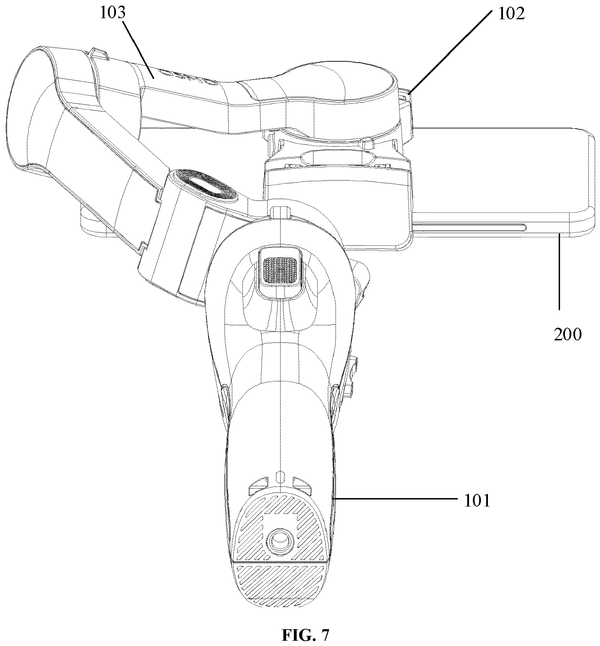

In one embodiment, when the handheld gimbal 100 is in the sixth use mode, the handle part 101 may be substantially in a horizontal state, and the back of the first bracket 102 may face the third direction. The third direction may be substantially perpendicular to the current axis direction of the handle part 101, and the second direction may be substantially opposite to the third direction. The joint angles of the second motor 106 and the third motor 107 may be both within the first preset joint angle range, and the joint angle of the first motor 105 may be within the second preset joint angle range. Referring to FIG. 7, which is a schematic diagram of the handheld gimbal in the sixth use mode according to an embodiment of the present disclosure. As shown in FIG. 7, the handheld gimbal 100 is substantially in a horizontal state, a shooting device 200 is mounted on the first bracket 102, the screen of the shooting device 200 faces the ground, and the camera of the shooting device 200 is positioned on the left side of the first bracket 102 and is blocked by the second bracket 103. Compared with FIG. 5, the first bracket 102 is rotated 180° around the roll axis

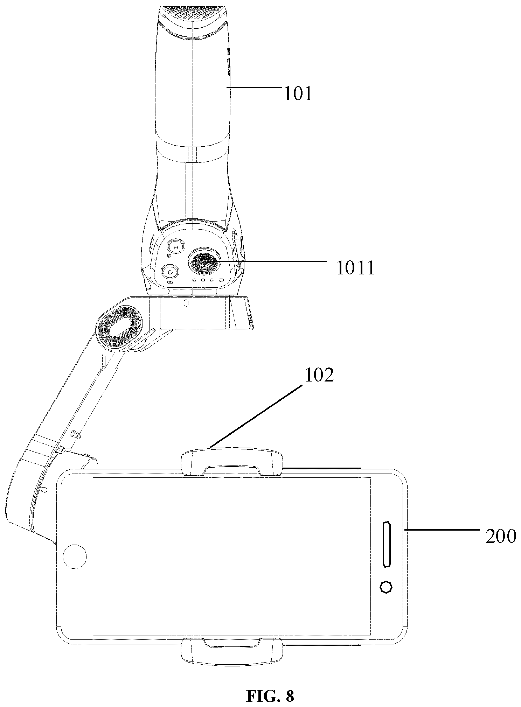

In one embodiment, when the handheld gimbal 100 is in the seventh use mode, the handle part 101 may be substantially in a vertically inverted state, and the back of the first bracket 102 may face the first direction. The first direction may be substantially perpendicular to the current axis direction of the handle part 101, and the joint angles of the first motor 105, the second motor 106, and the third motor 107 may be all within the first preset joint angle range. In some embodiments, the current axis direction of the handle part 101 in a substantially vertically inverted state may be substantially perpendicular to the horizon. That is, the current axis direction of the handle part 101 may deviate from the direction of gravity within the preset deviation angle range. In some embodiments, the preset deviation angle range may be between 0° to 45°. Further, the preset deviation angle range may be between 0° to 5°. Referring to FIG. 8, which is a schematic diagram of the handheld gimbal in a seventh use mode according to an embodiment of the present disclosure. As shown in FIG. 8, the handle part 101 is substantially in a vertically inverted state. An operation control button 1011 is disposed on the handle part 101. A shooting device 200 is mounted on the first bracket 102, and the orientation of the operation control button 1011 is substantially the same as the orientation of the screen of the shooting device 200. The camera of the shooting device 200 is positioned on the right side of the first bracket 102.

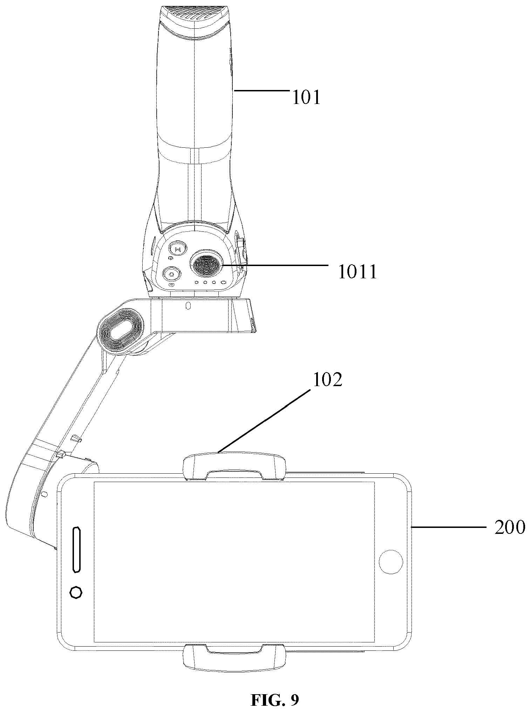

In one embodiment, when the handheld gimbal 100 is in the eighth use mode, the handle part 101 may be substantially in a vertically inverted state, and the back of the first bracket 102 may face the first direction. The first direction may be substantially perpendicular to the current axis direction of the handle part 101, the joint angles of the second motor 106 and the third motor 107 may be both within the first preset joint angle range, and the joint angle of the first motor 105 may be within the second preset joint angle range. Referring to FIG. 9, which is a schematic diagram of the handheld gimbal in the eighth use mode according to an embodiment of the present disclosure. As shown in FIG. 9, the handle part 101 is substantially in a vertically inverted state. An operation control button 1011 is disposed on the handle part 101. A shooting device 200 is mounted on the first bracket 102, and the orientation of the operation control button 1011 is substantially the same as the orientation of the screen of the shooting device 200. The camera of the shooting device 200 is positioned on the left side of the first bracket 102. Compared with FIG. 8, the first bracket 102 is rotated 180° around the roll axis.

It should be noted that the first joint angle range and the second joint angle range described above can be set based on actual conditions, which are not limited in the present disclosure. In some embodiments, the first joint angle range may be between -45° to 45°, and the second joint angle range may be between 135° to 225°.

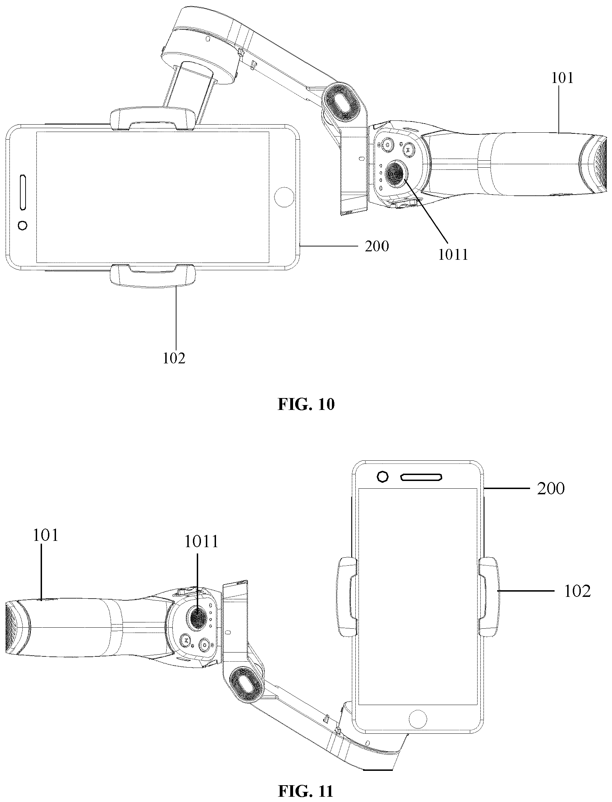

In one embodiment, when the handheld gimbal 100 is in the nineth use mode, the handle part 101 may be substantially in a first side-lying state, and the back of the first bracket 102 may face the first direction. The first direction may be substantially perpendicular to the current axis direction of the handle part 101. In some embodiments, when the handle part 101, which is substantially in the vertical state, is tilted counterclockwise such that the angle of the handle part 101 around the roll axis is within the preset angle range, the handle part 101 may be generally in the first side-lying state. Referring to FIG. 10, which is a schematic diagram of the handheld gimbal in the nineth use mode according to an embodiment of the present disclosure. As shown in FIG. 10, the handle part 101 is substantially lying on the left side. An operation control button 1011 is disposed on the handle part 101. A shooting device 200 is mounted on the first bracket 102, the orientation of the operation control button 1011 is substantially the same as the orientation of the screen of the shooting device 200, and the camera of the shooting device 200 is positioned on the left side of the first bracket 102. Compared with FIG. 2, the handle part 101 is tilted substantially 90° counterclockwise, and the first bracket is rotated substantially 90° around the roll axis.

In one embodiment, when the handheld gimbal 100 is in the tenth use mode, the handle part 101 may be substantially in a second side-lying state, and the back of the first bracket 102 may face the first direction. The first direction may be substantially perpendicular to the current axis direction of the handle part 101. In some embodiments, when the handle part 101, which is substantially in the vertical state, is tilted clockwise such that the angle of the handle part 101 around the roll axis is within the preset angle range, the handle part 101 may be generally in the second side-lying state. Referring to FIG. 11, which is a schematic diagram of the handheld gimbal in the tenth use mode according to an embodiment of the present disclosure. As shown in FIG. 11, the handle part 101 is substantially in the right side-lying state. An operation control button 1011 is disposed on the handle part 101. A shooting device 200 is mounted on the first bracket 102, the orientation of the operation control button 1011 is substantially the same as the orientation of the screen of the shooting device 200, and shooting device 200 is a portrait state. Compared with FIG. 2, the handle part 101 is tilted clockwise by substantially 90°, while the first bracket 102 remains stationary.

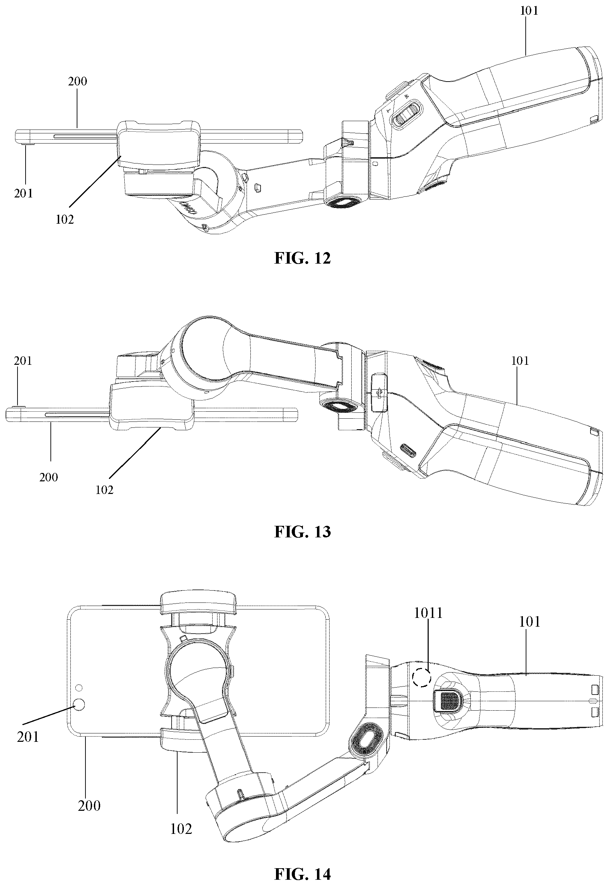

In one embodiment, when the handheld gimbal 100 is in the eleventh use mode, the handle part 101 may be substantially in the first side-lying state, and the back of the first bracket 102 may face the second direction. The second direction may be substantially perpendicular to the current axis direction of the handle part 101. Referring to FIG. 12, which is a schematic diagram of the handheld gimbal in the eleventh use mode according to an embodiment of the present disclosure. As shown in FIG. 12, the handle part 101 is substantially lying on the left side. A shooting device 200 is mounted on the first bracket 102, the screen of the shooting device 200 faces the sky, and a rear camera 201 is positioned on the left side of the first bracket 102. Compared with FIG. 10, the first bracket 102 is rotated substantially 90° around the pitch axis.

In one embodiment, when the handheld gimbal 100 is in the twelfth use mode, the handle part 101 may be substantially in the first side-lying state, and the back of the first bracket 102 may face the third direction. The third direction may be substantially perpendicular to the current axis direction of the handle part 101, and the second direction may be substantially opposite to the third direction. Referring to FIG. 13, which is a schematic diagram of the handheld gimbal in the twelfth use mode according to an embodiment of the present disclosure. As shown in FIG. 13, the handle part 101 is substantially lying on the left side. A shooting device 200 is mounted on the first bracket 102, the screen of the shooting device 200 faces the ground, and a rear camera 201 is positioned on the left side of the first bracket 102. Compared with FIG. 10, the first bracket 102 is rotated substantially 90° around the pitch axis.

In one embodiment, when the handheld gimbal 100 is in the thirteenth use mode, the handle part 101 may be substantially in the first side-lying state, and the back of the first bracket 102 may face a fourth direction. The fourth direction may be substantially perpendicular to the current axis direction of the handle part 101, and the fourth direction may be substantially opposite to the first direction. In some embodiments, the fourth direction being substantially perpendicular to the current axis direction of the handle part 101 may be the included angle between the fourth direction and the current axis direction of the handle part 101 being between 85° to 95°. Referring to FIG. 14, which is a schematic diagram of the handheld gimbal in the thirteenth use mode according to an embodiment of the present disclosure. As shown in FIG. 14, the handle part 101 is substantially lying on the left side. A shooting device 200 is mounted on the first bracket 102, the orientation of the operation control button 1011 is substantially the same as the orientation of the screen of the shooting device 200, and a rear camera 201 is positioned on the left side of the first bracket 102. Compared with FIG. 10, the first bracket 102 is rotated substantially 180° around the pitch axis.

In one embodiment, when the handheld gimbal 100 is in the fourteenth use mode, the handle part 101 may be substantially in the second side-lying state, and the back of the first bracket 102 may face the second direction. The second direction may be substantially perpendicular to the current axis direction of the handle part 101. When the handheld gimbal 100 is switched from the tenth use mode as shown in FIG. 11 to the fourteenth use mode, the first bracket 102 may rotate 90° around the pitch axis, the screen orientation of the mounted shooting device may change to face the sky, and the shooting device may be in the portrait state.

In one embodiment, when the handheld gimbal 100 is in the fifteenth use mode, the handle part 101 may be substantially in the second side-lying state, and the back of the first bracket 102 may face the third direction. The third direction may be substantially perpendicular to the current axis direction of the handle part 101, and the second direction may be substantially opposite to the third direction. When the handheld gimbal 100 is switched from the tenth use mode as shown in FIG. 11 to the fifteenth use mode, the first bracket 102 may rotate 90° around the pitch axis, the screen orientation of the mounted shooting device may change to face the ground, and the shooting device may be in the portrait state.

In one embodiment, when the handheld gimbal 100 is in the sixteenth use mode, the handle part 101 may be substantially in the second side-lying state, and the back of the first bracket 102 may face the fourth direction. The fourth direction may be substantially perpendicular to the current axis direction of the handle part 101, and the fourth direction may be substantially opposite to the first direction. When the handheld gimbal 100 is switched from the tenth use mode as shown in FIG. 11 to the sixteenth use mode, the first bracket 102 may rotate 180° around the pitch axis, the orientation of the back of the mounted shooting device may be substantially opposite to the orientation of the back of the shooting device as shown in FIG. 11, and the shooting device may be in the portrait state.

It should be noted that the preset angle range described above can be set based on actual conditions, which is not limited in the present disclosure. In some embodiments, the preset angle range may be between 30° to 150°.

In one embodiment, the handheld gimbal 100 may also include a controller. The controller may be configured to control the rotation of the first motor 105, the second motor 106, and/or the third motor 107 to change the attitude of the handle part 101, the attitude of the first bracket 102, and/or the joint angles of the motors of the handheld gimbal 100, thereby realizing the switch of the handheld gimbal between different use modes.

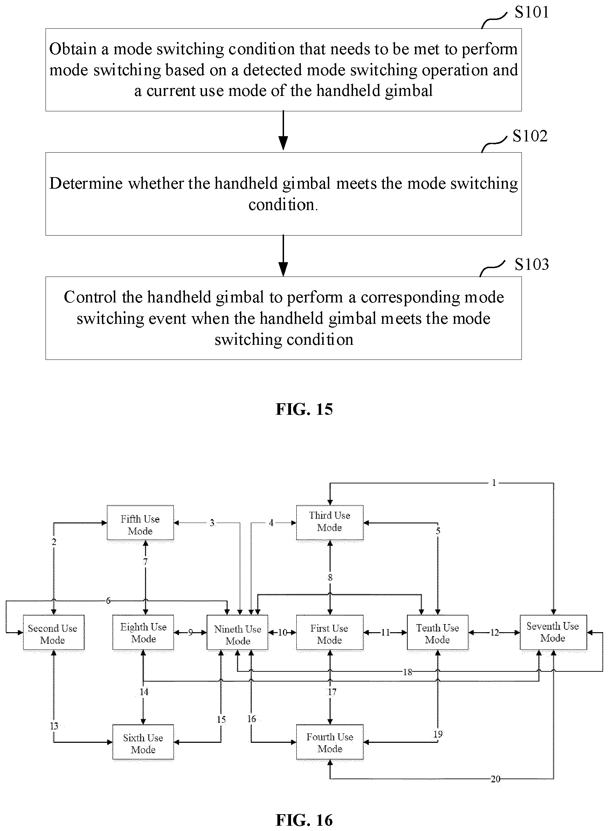

Referring to FIG. 15, which is a flowchart of switching the use mode of the handheld gimbal according to an embodiment of the present disclosure. As shown in FIG. 15, the controller is used to implement step S101 to step S103.

Step S101, obtaining a mode switching condition that needs to be met to perform mode switching based on a detected mode switching operation and a current use mode of the handheld gimbal.

More specifically, the controller may be configured to obtain the current attitude and the historical attitude of the handle part 101, where the current attitude may be the attitude of the handle part 101 at the current time, and the historical attitude may be the attitude of the handle part 101 at a previous time. The controller may also be configured to obtain the current orientation and the historical orientation of the back of the first bracket 102, where the current orientation may be orientation of the back of the first bracket 102 at the current time, and the historical orientation may be the orientation of the back of the first bracket 102 at the previous time. The controller may also be configured to obtain the current joint angle and historical joint angle of each motor of the handheld gimbal 100, where the current joint angle may be the joint angle of each motor of the handheld gimbal 100 at the current time, and the historical joint angle may be the joint angle of each motor of the handheld gimbal 100 at the previous time. The controller may also be configured to determine whether the user is performing the mode switching operation on the handheld gimbal 100 based on the current attitude and historical attitude of the handle part 101, and/or the current orientation and historical orientation of the back of the first bracket 102, and/or the current joint angle and historical joint angle of each motor.

The controller may be configured to determine the attitude change trend of the handle part 101 based on the current attitude and the historical attitude of the handle part 101, determine the change trend of the back of the first bracket 102 based on the current orientation and the historical orientation of the back of the first bracket 102, determine the change trend of the joint angle of each motor based on the current joint angle and the historical joint angle of each motor of the handheld gimbal 100, and determine whether the user is performing the mode switching operation on the handheld gimbal 100 based on the attitude change trend, the orientation change trend, and/or the joint angle change trend. Through the attitude change trend of the handle part 101, the orientation change trend of the back of the first bracket 102, and/or the joint angle change trend of each motor, the user's mode switching operation of the handheld gimbal 100 can be accurately detected, which is convenient for the subsequent accurate control of the handheld gimbal for mode switching.

It should be noted that when the attitude change trend meets a preset attitude change condition, the orientation change trend meets a preset orientation change condition, and/or the joint angle change trend meets a preset joint angle change condition, it can be determined that the user has performed a mode switching operation on the handheld gimbal 100. In addition, when the attitude change trend does not meet the preset attitude change condition, the orientation change trend does not meet the preset orientation change condition, and the joint angle change trend does not meet the preset joint angle change condition, it can be determined that the user has not performed a mode switching operation on the handheld gimbal 100.

In one embodiment, before the user switches the mode of the handheld gimbal 100, the controller may control the handheld gimbal 100 to be in a mode switching state. In some embodiments, the attitude of the handheld gimbal 100 in the mode switching state may not change automatically, but it can be changed under the user's operation, and the attitude of the first bracket 102 may not change with the attitude of the handle part 101. After the handheld gimbal 100 completes the mode switching, the handheld gimbal 100 can be controlled to be in a normal follow state. In some embodiments, the attitude of the first bracket 102 of the handheld gimbal 100 in the normal follow state may change with the attitude of the handle part 101. In this way, problems such as damage to the gimbal and the inability to switch the use mode due to the automatic change of the attitude of the handheld gimbal 100 can be prevented when the use mode of the handheld gimbal 100 is switched, which greatly improves the safety and reliability of mode switching.

In one embodiment, the mode switching condition acquisition method may include the controller obtaining the use mode and the mode switching operation, and a mapping relationship table between the mode switching conditions, where the use mode and the mode switching operation has a corresponding relationship with the mode switching conditions; and, obtaining the mode switching conditions that need to be met to perform the mode switching based on the mode switching operations, the current use mode of the handheld gimbal 100, and the mapping relationship table. That is, the mapping relationship table can be queried to obtain the mode switching condition corresponding to the mode switching operations and the current use mode of the handheld gimbal 100. It should be noted that the mapping relationship table between the use modes and the mode switching operations and the mode switching conditions described above can be set based on actual conditions, which is not limited in the embodiments of the present disclosure. By setting the mapping relationship table, the mode switching condition that needs to be met to perform mode switching can be quickly and accurately obtained, which is convenient for the subsequent control of the handheld gimbal 100 for mode switching.

Step S102, determining whether the handheld gimbal meets the mode switching condition.

More specifically, the controller may be configured to obtain current attitude information of the handle part 101, current attitude information of the first bracket 102, and/or the current joint angles of the motors of the handheld gimbal 100, where the current attitude information of the handle part may be the attitude information of the handle part at the current time, the current attitude information of the first bracket 102 may be the attitude information of the first bracket 102 at the current time, and the current joint angle of each motor may be the joint angle of each motor at the current time; and, determine whether handheld gimbal meets the mode switching condition based on the current attitude information of the handle part 101, the current attitude information of the first bracket 102, and/or the current joint angles of the motors of the handheld gimbal 103. Through the current attitude information of the handle part 101, the current attitude information of the first bracket 102, and/or the current joint angles of the motors of the handheld gimbal 100, whether the handheld gimbal 100 meets the mode switching condition can be accurately determined, which is convenient for the accurate subsequent controls of the handheld gimbal 100 in performing mode switching.

It should be noted that the mode switching condition may include at least one of the handle part 101, the first bracket 102, and each motor of the handheld gimbal 100 meeting a first attitude condition, a second attitude condition, and a joint angle condition, respectively. Then the method for determining whether the handheld gimbal 100 meets the mode switching condition may include obtaining the first attitude condition, the second attitude condition and the joint angle condition that the handle part 101, the first bracket 102, and each motor of the handheld gimbal 100 needs to meet from the mode switching condition; determining whether the current attitude of the handle part 101 meets the first attitude condition based on the current attitude information of the handle part 101; and/or determining whether the current attitude of the first bracket 102 meets the second attitude condition based on the current attitude information of the first bracket 102; and/or determining whether the current joint angle of each motor of the handheld gimbal 100 meets the joint angle condition based on the current joint angle of each motor of the handheld gimbal 100; and determining whether the handheld gimbal 100 meets the mode switching condition based on a determination result of the handle part 101, a determination result of the first bracket 102, and/or a determination result of each motor of the handheld gimbal 100.

In some embodiments, current attitude information of the first bracket 102 may be determined by the set attitude acquisition element, and the current attitude information of the handle part 101 may be determined based on the current attitude information of the first bracket. Alternatively, both the first bracket and the handle part may be provided with the attitude acquisition elements, and the current attitude information of the first bracket 102 and the current attitude information of the handle part 101 may be determined by the respective attitude acquisition elements. By setting the attitude acquisition element on the first bracket 102, but not on the handle part 101, the device cost can be reduced, and accurate attitude information of the first bracket 102 and the handle part 101 can also be obtained. Further, by providing the attitude acquisition elements on both the first bracket 102 and the handle part 101, the attitude information of the handle part 101 does not need to be obtained through complicated calculations, and the attitude information of the first bracket 102 and the handle part 101 can be quickly obtained.

Step S103, controlling the handheld gimbal to perform a corresponding mode switching event when the handheld gimbal meets the mode switching condition.

When the handheld gimbal meets the mode switching condition, the controller may control the handheld gimbal 100 to execute the corresponding mode switching event. In one embodiment, when the handheld gimbal 100 is in a power-on state, the controller may control the handheld gimbal to be in a first control mode. Since the handle part 101 of the handheld gimbal 100 is generally in a vertical state, the back of the first bracket of the handheld gimbal 100 may face the front. That is, the screen of the shooting device mounted on the first bracket may face the user, such that it is convenient for the user to operation the handheld gimbal, and it is also convenient for the user to switch the first use mode of the handheld gimbal 100 to the other use modes, which greatly improves the convenience of switching the use modes.

Referring to FIG. 16, the various use modes of the handheld gimbal 100 can be switched freely.

FIG. 16 is a schematic diagram of switching between the use modes of the handheld gimbal according to an embodiment of the present disclosure. As shown in FIG. 16, the first use mode can be switched with the third use mode, the fourth use mode, the nineth use mode, and the tenth use mode respectively; the second use mode can be switched with the fifth use mode, the sixth use mode, and the ninth use mode respectively; the third use mode can be switched with the first use mode, the seventh use mode, the nineth use mode, and the tenth use mode respectively; the fourth use mode can be switched with the first use mode, the seventh use mode, the nineth use mode, and the tenth use mode respectively; the fifth use mode can be switched with the second use mode, the eighth use mode, and the nineth use mode respectively; the sixth use mode can be switched with the second use mode, the seventh use mode, the eighth use mode, and the nineth use mode respectively; the seventh use mode can be switched with the third use mode, the fourth use mode, the sixth use mode, the eighth use mode, the nineth use mode, and the tenth use mode respectively; the eighth use mode can be switched with the fifth use mode, the sixth use mode, the seventh use mode, and the nineth use mode respectively; the nineth use mode can be switched with the first use mode, the second use mode, the third use mode, the fourth use mode, the fifth use mode, the sixth use mode, the seventh use mode, the eighth use mode, and the tenth use mode respectively; and the tenth use mode can be switched with the first use mode, the third use mode, the fourth use mode, the seventh use mode, and the nineth use mode respectively.

In some embodiments, the mode switching condition for switching from the third use mode to the seventh use mode may be the attitude of the handheld gimbal changing from a substantially horizontal state to a substantially vertically inverted state. The mode switching condition for switching from the seventh use mode to the third use mode may be the attitude of the handle part changing from a substantially vertically inverted state to a substantially horizontal state, the pitch angle of the third bracket being greater than or equal to the joint angle of the first bracket, and the pitch angle of the third bracket being less than or equal to 0°.

In some embodiments, the mode switching condition for switching from the second use mode to the fifth use mode may be the attitude of the handle part changing from a substantially vertical state to a substantially horizontal state, a difference between 180° and an absolute value of the pitch angel of the third bracket being greater than or equal to an absolute value of a difference between the joint angle of the first bracket and 180°, and the pitch angle of the third bracket being less than or equal to 0°. The mode switching condition for switching from the fifth use mode to the second use mode may be the attitude of the handle part changing from a substantially horizontal state to a substantially vertical state.

In some embodiments, the mode switching condition for switching from the fifth use mode to the nineth use mode may be the handheld gimbal being in a locked state or a rocker of the handheld gimbal being in a rocking state, the joint angle of the first bracket changing more than 45°, and the handle part being substantially in the first side-lying state. The mode switching condition for switching from the nineth use mode to the fifth use mode may be the handheld gimbal being in the locked state or the rocker of the handheld gimbal being in the rocking state, the joint angle of the first bracket changing more than 45°, and the handle part being substantially in the horizontal state. In some embodiments, when the handheld gimbal is in the locked state, the orientation of the first bracket of the handheld gimbal may be locked. That is, the orientation of the first bracket of the handheld gimbal may not change. When the handle part is substantially in the horizontal state, the joint angle of the first bracket may be substantially 180°, which can be an angle range near 180°, such as 180° ± 45°.

In some embodiments, the mode switching condition for switching from the third use mode to the nineth use mode may be the handheld gimbal being in the locked state or the rocker of the handheld gimbal being in the rocking state, the joint angle of the first bracket changing more than 45°, and the handle part being substantially in the first side-lying state. The mode switching condition for switching from the nineth use mode to the third use mode may be the handheld gimbal being in the locked state or the rocker of the handheld gimbal being in the rocking state and the handle part being substantially in the horizontal state, or the first bracket being turned 90° backward and the joint angle of the first bracket being greater than 20°.

In some embodiments, the mode switching condition for switching from the third use mode to the tenth use mode may be the handheld gimbal being in the locked state or the rocker of the handheld gimbal being in the rocking state, the joint angle of the first bracket changing more than 45°, and the handle part being substantially in the second side-lying state. The mode switching condition for switching from the tenth use mode to the third use mode may be the handheld gimbal being in the locked state or the rocker of the handheld gimbal being in the rocking state, the joint angle of the first bracket changing more than 45°, and the handle part being substantially in the horizontal state, or the first bracket being turned 90° backward and the joint angle of the first bracket being greater than 20°.

In some embodiments, the mode switching condition for switching from the second use mode to the nineth use mode may be the handle part 101 changing from being substantially in the vertical state to being substantially in the first side-lying state, the absolute value of the difference between the joint angle of the first bracket and 180° being greater than the absolute value of the difference between 180° and the pitch angle of the third bracket, and the difference between the joint angle of the first bracket and 180° being less than 0. The mode switching condition for switching from the nineth use mode to the second use mode may be the handle part 101 changing from being substantially in the first side-lying state to being substantially in the vertical state, and the joint angle of the first bracket being substantially 180°, which may be an angle range near 180°, such as 180° ± 45°.

In some embodiments, the mode switching condition for switching from the fifth use mode to the eighth use mode may be the handle part changing from being substantially in the horizontal state to being substantially in the vertically inverted state. The mode switching condition for switching from the eighth use mode to the fifth use mode may be the handle part changing from being substantially in the vertically inverted state to being substantially in the horizontal state, the joint angle of the first bracket being substantially 180°, the absolute value of the pitch angle of the third bracket being greater than or equal to the absolute value of the difference between the joint angle of the first bracket and 180°, and the pitch angle of the third bracket being less than or equal to 0°.

In some embodiments, the mode switching condition for switching from the first use mode to the third use mode may be the handle part changing from being substantially in the horizontal state to being substantially in the vertical state. The mode switching condition for switching from the third use mode to the first use mode may be the handle part changing from being substantially in the vertical state to being substantially in the horizontal state, the absolute value of the difference between 180° and the pitch angle of the third bracket being greater than or equal to the absolute value of the joint angle of the first bracket, and the pitch angle of the third bracket being less than or equal to 0°.

In some embodiments, the mode switching condition for switching from the eighth use mode to the nineth use mode may be the handle part changing from being substantially in the vertically inverted state to being substantially in the first side-lying state, the absolute value of the pitch angle of the third motor being less than the absolute value of the difference the joint angle of the first motor and 180°, and the pitch angle of the third bracket being less than or equal to 0°. The mode switching condition for switching from the nineth use mode to the eighth use mode may be the handle part changing from being substantially in the first side-lying state to being substantially in the vertically inverted state, and the first bracket being in a reversed state.

In some embodiments, the mode switching condition for switching from the first use mode to the nineth use mode may be the handle part changing from being substantially in the vertical state to being substantially in the first side-lying state, the difference between 180° and the absolute value of the pitch angle of the third bracket being less than the joint angle of the first bracket, and the joint angle of the first bracket being greater than or equal to 0°. The mode switching condition for switching from the nineth use mode to the first use mode may be the handle part changing from being substantially in the first side-lying state to being substantially in the vertical state.

In some embodiments, the mode switching condition for switching from the first use mode to the tenth use mode may be the handle part changing from being substantially in the vertical state to being substantially in the second side-lying state, the difference between 180° and the absolute value of the pitch angle of the third bracket being less than the joint angle of the first bracket, and the joint angle of the first bracket being less than 0°. The mode switching condition for switching from the tenth use mode to the first use mode may be the handle part changing from being substantially in the second side-lying state to being substantially in the vertical state.

In some embodiments, the mode switching condition for switching from the tenth use mode to the seventh use mode may be the handle part changing from being substantially in the second side-lying state to being substantially in the vertically inverted state. The mode switching condition for switching from the seventh use mode to the tenth use mode may be the handle part changing from being substantially in the vertically inverted state to being substantially in the second side-lying state, the absolute value of the pitch angle of the third bracket being less than the joint angle of the first bracket, and the joint angle of the first bracket being less than 0°.

In some embodiments, the mode switching condition for switching from the second use mode to the sixth use mode may be the handle part changing from being substantially in the vertical state to being substantially in the horizontal state, the difference between the absolute value of the pitch angle and 180° and the third bracket being greater than the absolute value of the difference between the joint angle of the first bracket and 180°, and the pitch angle of the third bracket being greater than 0°. The mode switching condition for switching from the sixth use mode to the second use mode may be the handle part changing from being substantially in the horizontal state to being substantially in the vertical state.

In some embodiments, the mode switching condition for switching from the eighth use mode to the sixth use mode may be the handle part changing from being substantially in the vertically inverted state to being substantially in the horizontal state, the absolute value of the pitch angle of the third bracket being greater than or equal to the absolute value of the difference between the joint angle of the first bracket and 180°, and the pitch angle of the third bracket being greater than 0°. The mode switching condition for switching from the sixth use mode to the eighth use mode may be the handle part changing from being substantially in the horizontal state to being substantially in the vertically inverted state

In some embodiments, the mode switching condition for switching from the sixth use mode to the nineth use mode may be the handheld gimbal being in the locked state or the rocker of the handheld gimbal being in the rocking state, the joint angle of the first bracket changing more than 45°, and the handle part being substantially in the first side-lying state. The mode switching condition for switching from the nineth use mode to the sixth use mode may be the handheld gimbal being in the locked state or the rocker of the handheld gimbal being in the rocking state, the joint angle of the first bracket changing more than 45°, and the handle part being substantially in the horizontal state.

In some embodiments, the mode switching condition for switching from the nineth use mode to the fourth use mode may be the handheld gimbal being in the locked state or the rocker of the handheld gimbal being in the rocking state, the joint angle of the first bracket changing more than 45°, and the handle part being substantially in the horizontal state, or the first bracket being turned 90° backward, and the joint angle of the first bracket being greater than 20°. The mode switching condition for switching from the fourth use mode to the nineth use mode may be the handheld gimbal being in the locked state or the rocker of the handheld gimbal being in the rocking state, the joint angle of the first bracket changing more than 45°, and the handle part being substantially in the first side-lying state.

In some embodiments, the mode switching condition for switching from the first use mode to the fourth use mode may be the handle part changing from being substantially in the vertical state to being substantially in the horizontal state, the difference between 180° and the absolute value of the pitch angle of the third bracket being greater than the absolute value of the joint angle of the first bracket, and the pitch angle of the third bracket being greater than 0°. The mode switching condition for switching from the fourth use mode to the first use mode may be the handle part changing from being substantially in the horizontal state to being substantially in the vertical state.

In some embodiments, the mode switching condition for switching from the nineth use mode to the seventh use mode may be the handle part changing from being substantially in the first side-lying state to being substantially in the vertically inverted state, and the first bracket not being in the reversed state. The mode switching condition for switching from the seventh use mode to the nineth use mode may be the handle part changing from being substantially in the vertically inverted state to being substantially in the first side-lying state, the absolute value of the pitch angle of the third bracket being less than the absolute value of the joint angle of the first bracket, and the joint angle of the first bracket being greater than 0°.

In some embodiments, the mode switching condition for switching from the tenth use mode to the fourth use mode may be the handheld gimbal being in the locked state or the rocker of the handheld gimbal being in the rocking state, the joint angle of the first bracket changing more than 45°, and the handle part being substantially in the horizontal state, or the first bracket in a state of being turned 90° backward, and the joint angle of the first bracket being greater than 20°. The mode switching condition for switching from the fourth use mode to the tenth use mode may be the handheld gimbal being in the locked state or the rocker of the handheld gimbal being in the rocking state, the joint angle of the first bracket changing more than 45°, and the handle part being substantially in the second side-lying state.

In some embodiments, the mode switching condition for switching from the fourth use mode to the seventh use mode may be the handle part changing from being substantially in the horizontal state to being substantially in the vertically inverted state. The mode switching condition for switching from the seventh use mode to the fourth use mode may be the handle part changing from being substantially in the vertically inverted state to being substantially in the horizontal state, the absolute value of the pitch angle of the third bracket being greater than or equal to the joint angle of the first bracket, and the pitch angle of the third bracket being greater than 0°.

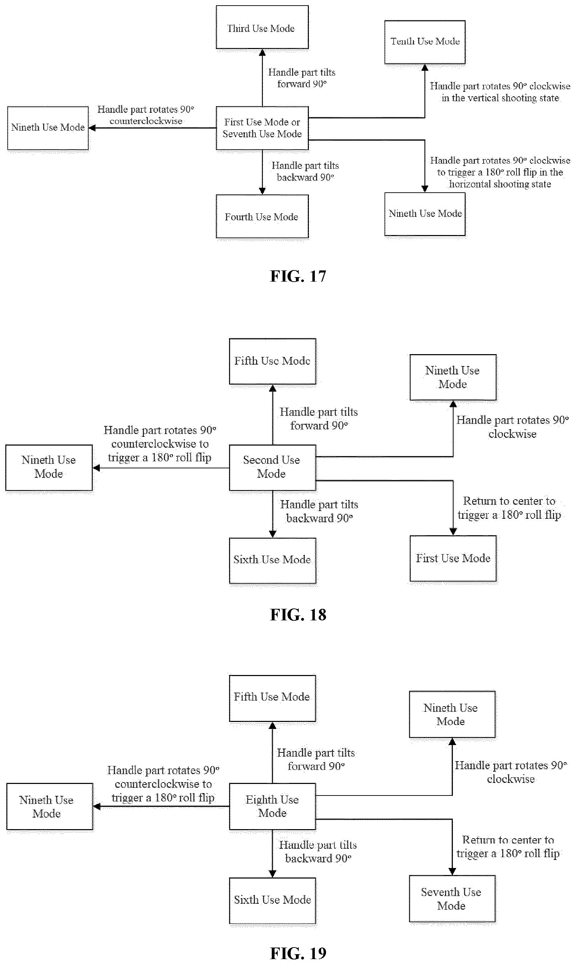

Referring to FIG. 17, which is another schematic diagram of switching between the use modes of the handheld gimbal according to an embodiment of the present disclosure. As shown in FIG. 17, the handheld gimbal in the first use mode or the seventh use mode. When the handle part is tilted forward by 90°, the handheld gimbal is switched to the third use mode; when the handle part is tilted backward by 90°, the handheld gimbal is switched to the fourth use mode; when the handle part rotates 90° counterclockwise or when the handle part rotates 90° clockwise in the horizontal shooting state, a roll flip of 180° is triggered, and the handheld gimbal is switched to the nineth use mode; and when the handle part rotates 90° clockwise in the vertical shooting mode, the handheld gimbal is switched to the tenth use mode.

Referring to FIG. 18, which is another schematic diagram of switching between the use modes of the handheld gimbal according to an embodiment of the present disclosure. As shown in FIG. 18, the handheld gimbal in the second use mode. When the handle part is tilted forward by 90°, the handheld gimbal is switched to the fifth use mode; when the handle part is tilted backward by 90°, the handheld gimbal is switched to the sixth use mode; when the handle part rotates 90° clockwise or the handle part rotates 90° counterclockwise, a roll flip of 180° is triggered, and the handheld gimbal is switched to the nineth use mode; and when returned to the center, the roll flip of 180° is triggered, and the handheld gimbal is switched to the first use mode.

Referring to FIG. 19, which is another schematic diagram of switching between the use modes of the handheld gimbal according to an embodiment of the present disclosure. As shown in FIG. 19, the handheld gimbal in the eighth use mode. When the handle part is tilted forward by 90°, the handheld gimbal is switched to the fifth use mode; when the handle part is tilted backward by 90°, the handheld gimbal is switched to the sixth use mode; when the handle part rotates 90° clockwise or the handle part rotates 90° counterclockwise, a roll flip of 180° is triggered, and the handheld gimbal is switched to the nineth use mode; and when returned to the center, the roll flip of 180° is triggered, and the handheld gimbal is switched to the seventh use mode.

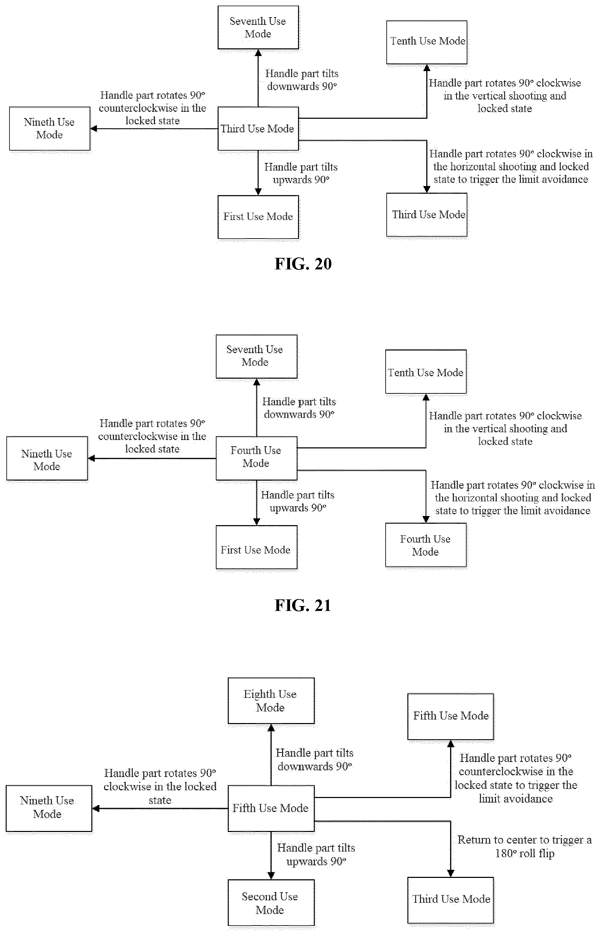

Referring to FIG. 20, which is another schematic diagram of switching between the use modes of the handheld gimbal according to an embodiment of the present disclosure. As shown in FIG. 20, the handheld gimbal in the third use mode. When the handle part is tilted upwards by 90°, the handheld gimbal is switched to the first use mode; when the handle part is tilted downwards by 90°, the handheld gimbal is switched to the seventh use mode; when the handle part rotates 90° counterclockwise in the locked state, the handheld gimbal is switched to the nineth use mode; when the handle part rotates 90° clockwise in the vertical shooting state and the locked state, the handheld gimbal is switched to the tenth use mode; and when the handle part rotates 90° in the horizontal shooting state and the locked state, a limit avoidance is triggered, and the handheld gimbal remains in the third use mode.

Referring to FIG. 21, which is another schematic diagram of switching between the use modes of the handheld gimbal according to an embodiment of the present disclosure. As shown in FIG. 21, the handheld gimbal in the fourth use mode. When the handle part is tilted upwards by 90°, the handheld gimbal is switched to the first use mode; when the handle part is tilted downwards by 90°, the handheld gimbal is switched to the seventh use mode; when the handle part rotates 90° counterclockwise in the locked state, the handheld gimbal is switched to the nineth use mode; when the handle part rotates 90° clockwise in the vertical shooting state and the locked state, the handheld gimbal is switched to the tenth use mode; and when the handle part rotates 90° in the horizontal shooting state and the locked state, a limit avoidance is triggered, and the handheld gimbal remains in the fourth use mode.

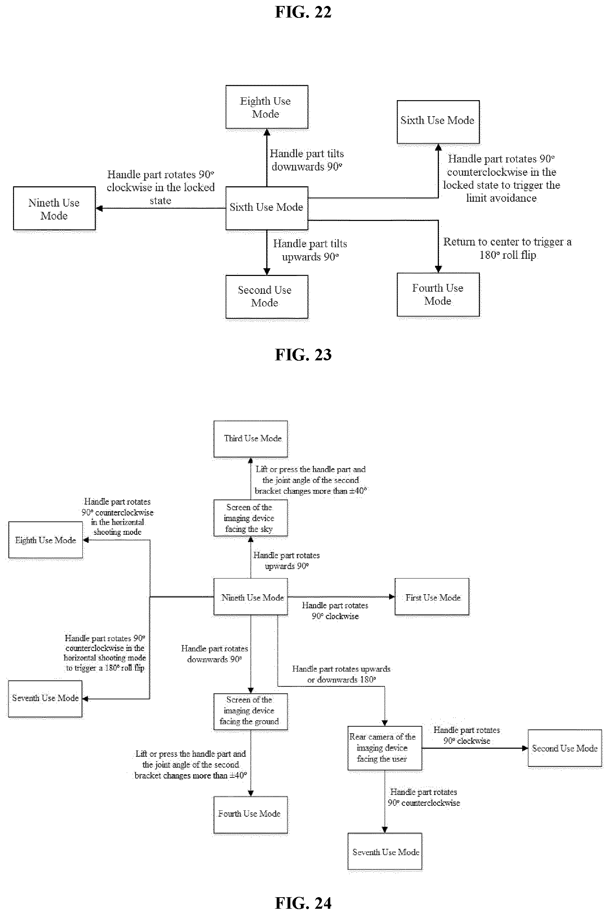

Referring to FIG. 22, which is another schematic diagram of switching between the use modes of the handheld gimbal according to an embodiment of the present disclosure. As shown in FIG. 22, the handheld gimbal in the fifth use mode. When the handle part is tilted upwards by 90°, the handheld gimbal is switched to the second use mode; when the handle part is tilted downwards by 90°, the handheld gimbal is switched to the eighth use mode; when the handle part rotates 90° clockwise in the locked state, the handheld gimbal is switched to the nineth use mode; when the handle part rotates 90° counterclockwise in the locked state, a limit avoidance is triggered, and the handheld gimbal remains in the fifth use mode; and when returned to the center, a roll flip of 180° is triggered, and the handheld gimbal is switched to the third use mode.

Referring to FIG. 23, which is another schematic diagram of switching between the use modes of the handheld gimbal according to an embodiment of the present disclosure. As shown in FIG. 23, the handheld gimbal in the sixth use mode. When the handle part is tilted upwards by 90°, the handheld gimbal is switched to the second use mode; when the handle part is tilted downwards by 90°, the handheld gimbal is switched to the eighth use mode; when the handle part rotates 90° clockwise in the locked state, the handheld gimbal is switched to the nineth use mode; when the handle part rotates 90° counterclockwise in the locked state, a limit avoidance is triggered, and the handheld gimbal remains in the sixth use mode; and when returned to the center, a roll flip of 180° is triggered, and the handheld gimbal is switched to the fourth use mode.

Referring to FIG. 24, which is another schematic diagram of switching between the use modes of the handheld gimbal according to an embodiment of the present disclosure. As shown in FIG. 24, the handheld gimbal in the nineth use mode. When the handle part rotates 90° clockwise, the handheld gimbal is switched to the first use mode; when the handle part is turned 180° upwards or downwards and the rear camera of the shooting device faces the users, when the handle part rotates 90° counterclockwise, the handheld gimbal is switched to the nineth use mode, and when the handheld gimbal rotates 90° clockwise, the handheld gimbal is switched to the second use mode; when the handle part is turned downwards by 90° and the screen of the shooting device is facing the ground, when the handle part is lifted up or the handle part is pressed down and the joint angle of the second bracket changes more than ±40° , the handheld gimbal is switched to the fourth use mode; when the handle part is turned upwards by 90° and the screen of the shooting device is facing the sky, when the handle part is lifted up or the handle part is pressed down and the joint angle of the second bracket changes more than ±40° , the handheld gimbal is switched to the fifth use mode; when the handle part rotates 90° counterclockwise in the horizontal shooting state, the handheld gimbal is switched to the eighth use mode; and when the handle part rotates 90° counterclockwise in the horizontal shooting state, a roll flip of 180° is triggered, and the handheld gimbal is switched to the seventh use mode.

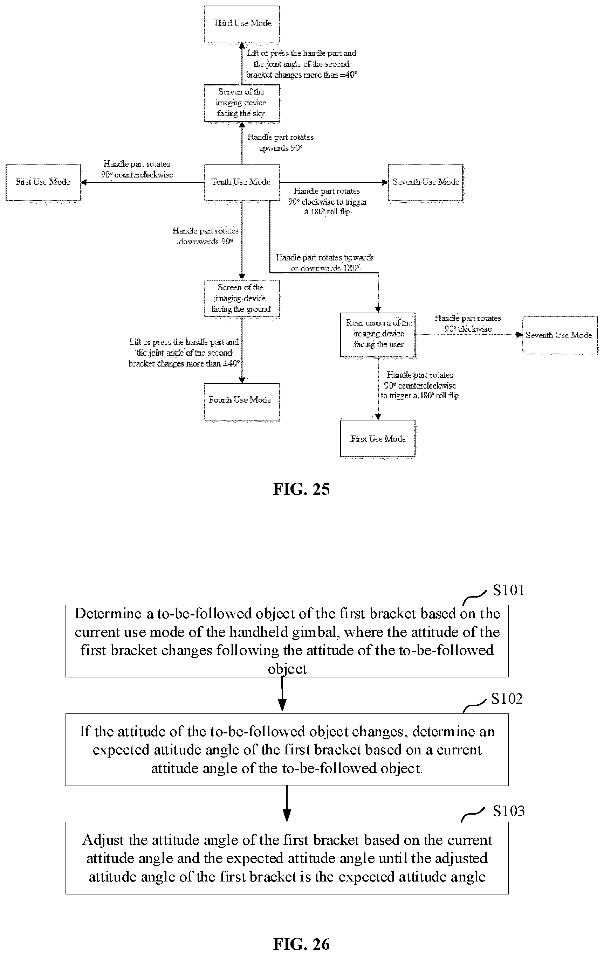

Referring to FIG. 25, which is another schematic diagram of switching between the use modes of the handheld gimbal according to an embodiment of the present disclosure. As shown in FIG. 25, the handheld gimbal in the tenth use mode. When the handle part rotates 90° clockwise, a roll flip of 180° is triggered, and the handheld gimbal is switched to the seventh use mode; when the handle part is turned 180° upwards or downwards and the rear camera of the shooting device faces the users, when the handle part rotates 90° counterclockwise and a roll flip of 180° is triggered, the handheld gimbal is switched to the first use mode, and when the handheld gimbal rotates 90° clockwise, the handheld gimbal is switched to the second use mode; when the handle part is turned downwards by 90° and the screen of the shooting device is facing the ground, when the handle part is lifted up or the handle part is pressed down and the joint angle of the second bracket changes more than ±40° , the handheld gimbal is switched to the fourth use mode; when the handle part is turned upwards by 90° and the screen of the shooting device is facing the sky, when the handle part is lifted up or the handle part is pressed down and the joint angle of the second bracket changes more than ±40° , the handheld gimbal is switched to the third use mode; when the handle part rotates 90° counterclockwise, the handheld gimbal is switched to the eighth use mode.

The present disclosure also provides a gimbal control method, which can be applied to a shooting stabilizer. For example, the shooting stabilizer may be a handheld gimbal. The handheld gimbal may be selected as the handheld gimbal 100 as shown in FIG. 1. As shown in FIG. 1, the handheld gimbal 100 includes 1 handle part 101, a first bracket 102, a second bracket 103, a third bracket 104, a first motor 105, a second motor 106, and a third motor 107. The handle part 101 may include a plurality of use modes, and the plurality of use modes may correspond to a plurality of attitudes of the first bracket 102 respectively. Different use modes may correspond to different attitude, which is convenient for users to switch the handheld gimbal to a suitable use mode in a variety of use cases, which can improve the convenience of operation while ensuring the stability and clarity of the captured images.

In some embodiments, the first bracket 102 may be used to mount a payload, the second bracket 103 may be connected between the first bracket 102 and the third bracket 104, and the third bracket 104 may be used to connected with the handle part 101. The first motor 105 may be installed on the first bracket 102 and used to connect the first bracket 102 and the second bracket 103. The first motor 105 may drive the first bracket 102 to rotate to realize the switch between the plurality of use modes of the handheld gimbal 100. The second motor 106 may be used to connect the second bracket 103 and the third bracket 104 to drive the second bracket 103 to rotate, and the third motor 107 may be used to connect the third bracket 104 to the handle part 101 to drive the third bracket 104 to rotate.

In some embodiments, one side of the second motor 106 may be installed on the second bracket 103, and the other side of the second motor 106 may be installed on the third bracket 104, such that the second motor 106 can drive the second bracket 103 to rotate. Further, one side of the third motor 107 may be installed on the third bracket 104, and the other side of the third motor 107 may be installed on the handle part 101, such that the third motor 107 can drive the third bracket 104 to rotate.

In some embodiments, when the handle part 101 is substantially in a vertical state, tilting the handle part 101 counterclockwise or clockwise to rotate the handle part 101 around the roll axis may cause the first motor 105 to follow the handle part 101 to rotate to drive the first bracket 102 to rotate around the roll axis; and/or, when the handle part 101 is substantially in a horizontal state, tilting the handle part 101 counterclockwise or clockwise to rotate the handle part 101 around the yaw axis may cause the first motor 105 to follow the handle part 101 to rotate to drive the first bracket 102 to rotate around the yaw axis.

It can be understood that when the handle part 101 is substantially in the vertical state, that is, the current axis direction of the handle part 101 may be substantially parallel to the direction of gravity, that is, the angle that the current axis direction of the handle part 101 deviates from the direction of gravity within a preset deviating angle range. When the handle part 101 is substantially in the horizontal state, the current axis direction of the handle part 101 may be substantially perpendicular to the direction of gravity, that is, the angle that the current axis direction of the handle part 101 deviates from the horizontal direction may be within the preset deviating angle range. In some embodiments, the preset deviating angle range may be between 0° to 45°. Further, the preset deviating angle range may be between 0° to 5°. It can be understood that in other embodiments, the term "substantially" is used to describe the orientation, and it also has a similar preset deviation angle range, which will not be repeated in the following description.

The gimbal control method can control the handheld gimbal to switch between different use modes, and it can also control the first bracket 102 of the handheld gimbal to follow the handle part 101, the second bracket 103, or the third bracket 104, and the attitude of the first bracket 102 may change with the change of attitude of the handle part 101, the second bracket 103, or the third bracket 104. The first bracket 101 can be used to mount a control terminal, such as a shooting device. The shooting device may be a smart phone, a camera, etc. In some embodiments, the first bracket 101 may also be integrated with the shooting device.

The control terminal may communicate with the handheld gimbal. The control terminal may be configured to control the handheld gimbal, and the handheld gimbal may enter a sleep mode. The specific method of the communication connection between the control and the handheld gimbal is not limited in the present disclosure. For example, wireless communication may be realized based on Bluetooth technology. In another example, wired communication connection may be realized based on communication interface such as RS-232.

The specific method for the handheld gimbal to enter the sleep mode in not limited in the present disclosure. For example, the user may trigger the handheld gimbal to enter the sleep mode through the control of a non-controlling terminal such as a button disposed on the handheld gimbal or through an internal mechanism of the handheld gimbal. Take the movable platform of the controlled device as a gimbal as an example. For example, the trigger condition for triggering the gimbal to enter the sleep mode may include, but is not limited to one or more of a buckled of the gimbal changing from an unbuckled state to a buckled state, or a first button being pressed based on a preset pressing rule. For example, the trigger condition for triggering the gimbal to enter an awake mode from the sleep mode may include one or more of a pressing of the first button based on a preset pressing rule, or double-clicking a second button. In some embodiments, the preset pressing rule may be flexibly designed. In some embodiments, the preset pressing rule may include, but is not limited to, one or more of a triple-clicking of the first button, and/or a long-press of the first button and the duration of the long-press being less than a duration threshold. In this way, it is convenient and quick for the movable platform to enter the sleep mode only by operating on the movable platform.

In some embodiments, the first button may support a one-key switching function of horizontal shooting and vertical shooting. In some embodiments, double-clicking the first button may trigger the one-key switching function of horizontal shooting and vertical shooting. In some embodiments, the second button may be a mode switching button, and the mode switching button may be used for switching between a portrait shooting mode and a landscape shooting mode of the movable platform of the gimbal.

In some embodiments, the first button may also support the function of calling up a shortcut menu. The user may operate the first button to call up the shortcut menu on the display interface of the control terminal, and change the shooting mode, the gimbal control mode, and enter a preview mode by operating on the first button, instead of operating on the display interface of the control terminal. The gimbal control mode may include a pan follow mode, a pitch lock mode, a FPV mode, etc. In this way, the user can achieve one-handed control of the handheld gimbal to facilitate user operations.

In some embodiments, the handheld gimbal may include a plurality of buttons. If there is no conflict, a plurality of operation buttons may be used to implement one or more of the above functions, which is not limited in the embodiments of the present disclosure.

Referring to FIG. 26, which is a flowchart of a gimbal control method according to an embodiment of the present disclosure.

More specifically, as shown in FIG. 26, the gimbal control method includes steps S201 to S203.

S201, determining a to-be-followed object of the first bracket based on the current use mode of the handheld gimbal, where the attitude of the first bracket changes following the attitude of the to-be-followed object.

More specifically, the to-be-followed object of the first bracket may be determined based on the current use mode of the handheld gimbal. That is, the mode type to which the current use mode of the handheld gimbal belongs may be determined, and the to-be-followed object of the first bracket of the handheld gimbal may be determined based on the mode type. In some embodiments, the to-be-followed object may be one of the handle part, the second bracket, or the third bracket of the handheld gimbal, and the attitude of the first bracket may change following the change of the attitude of the to-be-followed object. Through the mode type to which the current use mode belongs, the to-be-followed object of the first bracket of the handheld gimbal, that is, the camera, can be quickly and accurately determined, such that when the attitude of the to-be-followed object changes subsequently, the attitude of the first bracket can also change synchronously.

In some embodiments, the method for determining the mode type may include obtaining a mode identifier corresponding to the current use mode of the handheld gimbal, and determining an identifier set to which the mode identifier belongs; obtaining a mapping relationship table between a preset mode type and the identifier set, the mode type having a corresponding relationship with the identifier set; and determining the mode type to which the current use mode of the handheld gimbal belongs based on the identifier set and the mapping relationship table. That is, the mapping relationship table may be queried to obtain the mode type corresponding to the identifier set, and the obtained mode type may be used as the mode type to which the current use mode of the handheld gimbal belongs. It should be noted that the mapping relationship table between the preset mode type and the identifier set may be set based on actual situations, which is not limited in the embodiments of the present disclosure. By setting the mapping relationship table between the mode type and the identifier set, the mode type can be accurately and quickly determined by looking up the table, which facilitates the subsequent determination of the to-be-followed object of the first bracket based on the mode type.

In some embodiments, the handheld gimbal may be a handheld gimbal with a non-orthogonal structure. The handheld gimbal may include a plurality of use modes. The attitude of the handle part, the attitude of the first bracket and/or the joint angle of each motor of the handheld gimbal under different use modes may be different. In some embodiments, the plurality of use modes of the handheld gimbal may include the first use mode, the second use mode, the third use mode, the fourth use mode, the fifth use mode, the sixth use mode, the seventh use mode, the eighth use mode, the nineth use mode, the tenth use mode, the eleventh use mode, the twelfth use mode, the thirteenth use mode, the fourteenth use mode, the fifteenth use mode, and the sixteenth use mode.

In one embodiment, when the handheld gimbal is in the first use mode, the handle part may be substantially vertical state, the back of the first bracket may face a first direction, the first direction may be substantially perpendicular to the current axis direction of the handle part, and the joint angles of the first motor, the second motor, and the third motor may be all within a first preset joint angle range. In some embodiments, the current axis direction of the handle part in a substantially vertical state may be substantially perpendicular to the horizon. That is, the angle at which the current axis direction of the handle part deviates from the direction of gravity may be within the preset deviation angle range, and the bottom of the handle part may face the ground. In some embodiments, the preset deviation angle range may be between 0° to 45°, the first direction may be substantially perpendicular to the current axis direction of the handle part, and the included angle between the first direction and the current axis direction of the handle part 101 may be between 45 ° to 135°. Further, the preset deviation angle range may be between 0° to 5°. Furthermore, the preset deviation angle range may be 0°, and the first direction may be substantially perpendicular to the current axis direction of the handle part 101, and the included angle between the first direction and the current axis direction of the handle part 101 may be 90°.

In one embodiment, when the handheld gimbal is powered on, the handheld gimbal may be controlled to be in the first use mode. Since the handle part of the handheld gimbal is in the vertical state, and the back of the first bracket of the handheld gimbal faces the first direction, therefore, it may be convenient for the user to switch the first use mode of the handheld gimbal to other use modes, which greatly improves the convenient of switching the use modes.

In one embodiment, when the handheld gimbal is in the second use mode, the handle part may be substantially in the vertical state, the back of the first bracket may face the first direction, and the first direction may be substantially perpendicular to the current axis direction of the handle part. In addition, the joint angles of the second motor and the third motor of the handheld gimbal may be both within the first preset joint angle range, and the joint angle of the first motor may be within a second preset joint angle range. The handheld gimbal in the second use mode allows the shooting device to capture scenes that cannot be captured in other use modes, thereby increasing the shooting range of the shooting device.

In one embodiment, when the handheld gimbal is in the third use mode, the handle part may be substantially in a horizontal state, and the back of the first bracket may face a second direction. The second direction may be substantially perpendicular to the current axis direction of the handle part, and the joint angles of the first motor, the second motor, and the third motor may be all within the first preset joint angle range. In some embodiments, the current axis direction of the handle part in a substantially horizontal state may be parallel to the horizon. That is, the direction of the current axis direction of the handle part deviates from the horizon may be within the preset deviation angle range, and the direction of the bottom of the handle part may be substantially perpendicular to the direction of the back of the first bracket. In some embodiments, the preset deviation angle range may be between 0° to 45°, and the second direction may be substantially perpendicular to the current axis direction of the handle part 101, and the included angle between the second direction and the current axis direction of the handle part 101 may be between 45° to 135°. Further, the preset deviation angle range may be between 0° to 5°. Furthermore, the preset deviation angle range may be 0°, and the first direction may be substantially perpendicular to the current axis direction of the handle part 101, and the included angle between the first direction and the current axis direction of the handle part 101 may be 90°.

In one embodiment, when the handheld gimbal is in the fourth use mode, the handle part may be substantially in a horizontal state, and the back of the first bracket may face a third direction. The third direction may be substantially perpendicular to the current axis direction of the handle part, the second direction may be substantially opposite to the third direction, and the joint angles of the first motor, the second motor, and the third motor may be all within the first preset joint angle range. In some embodiments, the third direction being substantially perpendicular to the current axis direction of the handle part may be the included angle between the third direction and the current axis direction of the handle part being between 45° to 135°. Further, the third direction being substantially perpendicular to the current axis direction of the handle part may be the included angle between the third direction and the current axis direction of the handle part being between 85 to 95°

In one embodiment, when the handheld gimbal is in the fifth use mode, the handle part may be substantially in a horizontal state, and the back of the first bracket may face the second direction. The second direction may be substantially perpendicular to the current axis direction of the handle part, the joint angles of the second motor and the third motor may be both within the first preset joint angle range, and the joint angle of the first motor may be with the second preset joint angle range.

In one embodiment, when the handheld gimbal is in the sixth use mode, the handle part may be substantially in a horizontal state, and the back of the first bracket may face the third direction. The third direction may be substantially perpendicular to the current axis direction of the handle part, and the second direction may be substantially opposite to the third direction. The joint angles of the second motor and the third motor may be both within the first preset joint angle range, and the joint angle of the first motor may be within the second preset joint angle range.

In one embodiment, when the handheld gimbal is in the seventh use mode, the handle part may be substantially in a vertically inverted state, and the back of the first bracket may face the first direction. The first direction may be substantially perpendicular to the current axis direction of the handle part, and the joint angles of the first motor, the second motor, and the third motor may be all within the first preset joint angle range. In some embodiments, the current axis direction of the handle part in a substantially vertically inverted state may be substantially perpendicular to the horizon. That is, the current axis direction of the handle part may deviate from the direction of gravity within the preset deviation angle range. In some embodiments, the preset deviation angle range may be between 0° to 45°. Further, the preset deviation angle range may be between 0° to 5°.

In one embodiment, when the handheld gimbal is in the eighth use mode, the handle part may be substantially in a vertically inverted state, and the back of the first bracket may face the first direction. The first direction may be substantially perpendicular to the current axis direction of the handle part, the joint angles of the second motor and the third motor may be both within the first preset joint angle range, and the joint angle of the first motor may be within the second preset joint angle range.

It should be noted that the first joint angle range and the second joint angle range described above can be set based on actual conditions, which are not limited in the present disclosure. In some embodiments, the first joint angle range may be between -45° to 45°, and the second joint angle range may be between 135° to 225°.

In one embodiment, when the handheld gimbal is in the nineth use mode, the handle part may be substantially in a first side-lying state, and the back of the first bracket may face the first direction. The first direction may be substantially perpendicular to the current axis direction of the handle part. In some embodiments, when the handle part, which is substantially in the vertical state, is tilted counterclockwise such that the angle of the handle part around the roll axis is within the preset angle range, the handle part may be generally in the first side-lying state.

In one embodiment, when the handheld gimbal is in the tenth use mode, the handle part may be substantially in a second side-lying state, and the back of the first bracket may face the first direction. The first direction may be substantially perpendicular to the current axis direction of the handle part. In some embodiments, when the handle part, which is substantially in the vertical state, is tilted clockwise such that the angle of the handle part around the roll axis is within the preset angle range, the handle part may be generally in the second side-lying state.

In one embodiment, when the handheld gimbal is in the eleventh use mode, the handle part may be substantially in the first side-lying state, and the back of the first bracket may face the second direction. The second direction may be substantially perpendicular to the current axis direction of the handle part.

In one embodiment, when the handheld gimbal is in the twelfth use mode, the handle part may be substantially in the first side-lying state, and the back of the first bracket may face the third direction. The third direction may be substantially perpendicular to the current axis direction of the handle part, and the second direction may be substantially opposite to the third direction.

In one embodiment, when the handheld gimbal is in the thirteenth use mode, the handle part may be substantially in the first side-lying state, and the back of the first bracket may face a fourth direction. The fourth direction may be substantially perpendicular to the current axis direction of the handle part, and the fourth direction may be substantially opposite to the first direction. In some embodiments, the fourth direction being substantially perpendicular to the current axis direction of the handle part may be the included angle between the fourth direction and the current axis direction of the handle part being between 45° to 135°. Further, the fourth direction being substantially perpendicular to the current axis direction of the handle part may be the included angle between the fourth direction and the current axis direction of the handle part being between 85° to 95°.

In one embodiment, when the handheld gimbal is in the fourteenth use mode, the handle part may be substantially in the second side-lying state, and the back of the first bracket may face the second direction. The second direction may be substantially perpendicular to the current axis direction of the handle part.

In one embodiment, when the handheld gimbal is in the fifteenth use mode, the handle part may be substantially in the second side-lying state, and the back of the first bracket may face the third direction. The third direction may be substantially perpendicular to the current axis direction of the handle part, and the second direction may be substantially opposite to the third direction.

In one embodiment, when the handheld gimbal is in the sixteenth use mode, the handle part may be substantially in the second side-lying state, and the back of the first bracket may face the fourth direction. The fourth direction may be substantially perpendicular to the current axis direction of the handle part, and the fourth direction may be substantially opposite to the first direction.

S202, if the attitude of the to-be-followed object changes, determining an expected attitude angle of the first bracket based on a current attitude angle of the to-be-followed object.

Specifically, if the attitude of the to-be-followed object changes, the handheld gimbal may determine the expected attitude angle of the first bracket based on the current attitude angle of the to-be-followed object. Specifically, the difference between the current attitude angle of the to-be-followed object and the historical attitude angle may be calculated, where the historical attitude angle may be the attitude angle of the to-be-followed object at a previous time. An attitude angle coefficient may be determined based on the difference between the current attitude angle of the to-be-followed object and the historical attitude angle, and the expected attitude angle of the first bracket may be determined based on the attitude angle coefficient and the difference between the current attitude angle of the to-be-followed object and the historical attitude angle. It should be noted that the current attitude angle of the to-be-followed object may include a yaw angle and a pitch angle, and the expected attitude angle of the first bracket may include the yaw angle and the pitch angle. That is, the attitude of the first bracket may change with the change of the yaw angle and pitch angle of the to-be-followed object.

In some embodiments, the method for determining the attitude angle coefficient may be the handheld gimbal obtaining a mathematical expression between a pre-stored difference and the attitude angle coefficient, substituting the difference between the current attitude angle of the to-be-followed object and the historical attitude angle into the mathematical expression to obtain a calculation result, and using the calculation result as an attitude angle system. It should be noted that the mathematical expression between the difference and the attitude angle coefficient described above may be set based on actual situations, which is not limited in the present disclosure.

In some embodiments, the method for obtaining the attitude angle of the to-be-followed object may be, when the to-be-followed object is not provided with an attitude acquisition element and the first bracket is provided with an attitude acquisition element, using the handheld gimbal to obtain the attitude angle of the first bracket through the attitude acquisition element, and obtain joint angle data; and using the current attitude angle of the first bracket and the joint angle data to inversely calculate the attitude angle of the to-be-followed object. Further, when the to-be-followed object is provided with an attitude acquisition element, using the handheld gimbal to obtain the attitude angle of the to-be-followed object through the set attitude acquisition element.

S203, adjusting the attitude angle of the first bracket based on the current attitude angle and the expected attitude angle until the adjusted attitude angle of the first bracket is the expected attitude angle.

After determining the expected attitude angle of the first bracket, the handheld gimbal may adjust the attitude angle of the first bracket based on the current attitude angle and the expected attitude angle of the first bracket until the adjusted attitude angle of the first bracket is the expected attitude angle. In some embodiments, the first bracket may be provided with an attitude acquisition element, the current attitude angle of the first bracket may be determined by the set attitude acquisition element, and the current attitude angle of the handle part may be determined by inverse calculation of the current attitude angle of the first bracket. Alternatively, both the first bracket and the handle part may be provided with an attitude acquisition element, and the current attitude angle of the first bracket and the current attitude angle of the handle part may be determined by the respective set attitude acquisition elements. By arranging the attitude acquisition element on the first bracket, but not the handle part, the cost of the device can be reduced, and an accurate attitude angle of the first bracket and the handle part can also be obtained. Further, by arranging the attitude acquisition elements on both the first bracket and the handle part, the attitude angle of the handle part may not need to be obtained through complicated calculations, and the attitude angles of the first bracket and the handle part can be quickly obtained.

Specifically, the attitude deviation value of the first bracket may be determined based on the current attitude angle and the expected attitude angle of the first bracket, and an attitude adjustment instruction of the first bracket may be generated based on the attitude deviation value. That is, a pre-stored attitude deviation value and a rotation speed mapping relationship table may be obtained, the corresponding rotation speed may be determined based on the mapping relationship table and the attitude deviation value, and the attitude adjustment instruction of the first bracket may be generated based on the rotation speed. Based on the attitude adjustment instruction, the attitude angle of the first bracket can be adjusted until the adjusted attitude angle of the first bracket is the expected attitude angle. It should be understood that the attitude adjustment instruction can be used to control the rotation of the first bracket to drive the rotation of the first bracket, thereby adjusting the attitude angle of the first bracket. The mapping relationship table between the attitude deviation value and the rotation speed described above can be set based on actual situations, which is not limited in the present disclosure. Through the method described above, the first bracket can be smoothly adjusted to follow the determined to-be-followed object, which can effectively ensure the stability of shooting and improve the user experience.

In some embodiments, in the process of adjusting the attitude angle of the first bracket, whether the difference between the expected attitude angle and the adjusted attitude angle of the first bracket is greater than a preset threshold may be determined at a preset time interval. If the difference is greater than the preset threshold, the attitude adjustment instruction may be updated based on the difference, and the attitude angle of the first bracket may be adjusted based on the updated attitude adjustment instruction. If the difference is less than or equal to the preset threshold, the adjusted attitude angle of the first bracket may be determined as the expected attitude angle. It should be noted that the preset time interval described above can be set based on actual situations, which is not limited in the present disclosure. By updating the attitude adjustment instruction through the difference between the expected attitude angle and the attitude angle of the adjusted first bracket, the first bracket can follow the determined to-be-followed object smoothly and quickly, which can effectively ensure the stability of the shooting and improve the user experience.

In some embodiments, the method for adjusting the attitude adjustment instruction based on the difference may be obtaining the rotation speed corresponding to the difference, and determining whether the rotation speed is less than a preset speed threshold; updating the attitude adjustment instruction based on the rotation speed if the rotation speed is less than the preset speed threshold; and updating the attitude adjustment instruction based on the preset speed threshold if the rotation speed is greater than or equal to the preset speed threshold. By setting a maximum rotation speed, the first bracket can be controlled to follow the determined to-be-followed object smoothly and quickly, which can effectively ensure the stability of the shooting and improve the user experience.

In the gimbal control method provided in the foregoing embodiment, the to-be-followed object of the first bracket can be determined through the current use mode of the handheld gimbal. When the attitude of the to-be-followed object changes, the attitude angle of the first bracket can be adjusted such that the attitude of the first bracket can change following the change of the attitude of the to-be-followed object. In different types of use modes, the to-be-followed object can be different, which can greatly improve the accuracy of following, ensure the stability of the shooting, and greatly improve the user experience.

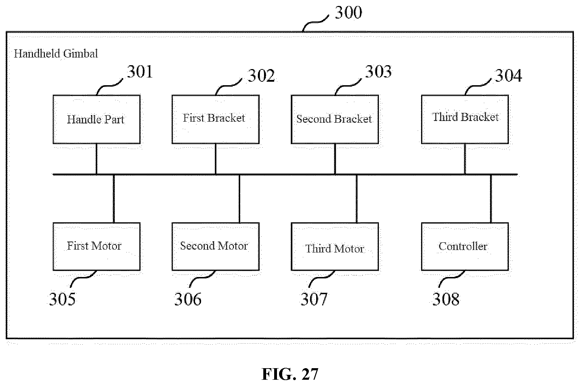

Referring to FIG. 27, which is a schematic block diagram of the handheld gimbal according to an embodiment of the present disclosure. As shown in FIG. 27, a handheld gimbal 300 includes a handle part 301, a first bracket 302, a second bracket 303, a third bracket 304, a first motor 305, a second motor 306, a third motor 307, and at least one controller 308. The controller 308 may be respectively communicatively connected with the first motor 305, the second motor 306, and the third motor 307. The handheld gimbal may include a plurality of use modes, and the plurality of use modes may correspond to a plurality of attitudes of the first bracket 302 respectively. In some embodiments, the first bracket 302 may be used to mount a payload, the second bracket 303 may be connected between the first bracket 302 and the third bracket 304, and the third bracket 304 may be used to connected with the handle part 301. The first motor 305 may be installed on the first bracket 302 and used to connect the first bracket 302 and the second bracket 303. The first motor 305 may drive the first bracket 302 to rotate to realize the switch between the plurality of use modes of the handheld gimbal 300. The second motor 306 may be used to connect the second bracket 303 and the third bracket 304 to drive the second bracket 303 to rotate, and the third motor 307 may be used to connect the third bracket 304 to the handle part 301 to drive the third bracket 304 to rotate.

In some embodiments, when the handle part 301 is substantially in a vertical state, tilting the handle part 301 counterclockwise or clockwise to rotate the handle part 301 around the roll axis may cause the first motor 305 to follow the handle part 301 to rotate to drive the first bracket 302 to rotate around the roll axis; and/or, when the handle part 301 is substantially in a horizontal state, tilting the handle part 301 counterclockwise or clockwise to rotate the handle part 301 around the yaw axis may cause the first motor 305 to follow the handle part 301 to rotate to drive the first bracket 302 to rotate around the yaw axis.

It should be understood that when the handle part 301 is substantially in the vertical state, that is, the current axis direction of the handle part 301 may be substantially parallel to the direction of gravity, that is, the angle that the current axis direction of the handle part 301 deviates from the direction of gravity within a preset deviating angle range. When the handle part 301 is substantially in the horizontal state, the current axis direction of the handle part 301 may be substantially perpendicular to the direction of gravity, that is, the angle that the current axis direction of the handle part 301 deviates from the horizontal direction may be within the preset deviating angle range. In some embodiments, the preset deviating angle range may be between 0° to 45°. Further, the preset deviating angle range may be between 0° to 5°.

In some embodiments, the second motor 306 may be installed between the second bracket 303 and the third bracket 304, and the second motor 306 may be configured to drive the second bracket 303 to rotate. The third motor 307 may be installed between the third bracket 304 and the handle part 301, and the third motor 307 may be configured to drive the third bracket to rotate.

Specifically, the controller 308 may be a micro-controller unit (MCU), a central processing unit (CPU), a digital signal processor (DSP), etc.

In some embodiments, the controller 308 may be configured to implement the steps of the gimbal control method provided in the foregoing embodiment.

It should be noted that those skilled in the art can clearly understand that, for the convenience and conciseness of description, for the specific working process of the handheld gimbal described above, reference can be made to the corresponding process in the gimbal control method embodiment described above, which will not be repeated here.

An embodiment of the present disclosure also provides a computer-readable storage medium having a computer program stored thereon. The computer program includes program instructions, and a processor can be configured to execute the program instructions to implement the steps of the gimbal control method provided in the foregoing embodiments.

The computer-readable storage medium may be an internal storage unit of the handheld gimbal described in any of the foregoing embodiments, such as a hard disk or a memory of the handheld gimbal. The computer-readable storage medium may be an external device external of the handheld gimbal, such as a plug-and-play hard disk, a smart media card (SMC), a secure digital card (SD), a flash card, etc.

It should be understood that the terminologies used in the specification are for the purpose of describing specific embodiments and are not intended to limit the present disclosure. As used in the specification and the appended claims, the singular forms "a," "an" and "the" are intended to include the plural forms as well, unless the context clearly indicates otherwise.

It should also be understood that the term "and/or" used in the specification and the appended claims may refer to any combination of one or more of the associated listed items and all possible combinations, and can include these combinations.

It should be noted that the above-mentioned description may merely the embodiments of the present disclosure and may not intended to limit the scope of the present disclosure. Those skilled in the art should understand that various modifications may be made in the present disclosure, or equivalent replacements of some or all of the technical features may be made in the present disclosure. However, the modifications and equivalent replacements made within the spirit and principle of the present disclosure should be included in the scope of the various claims of the present disclosure. The scope of the present disclosure is defined by the scope of the appended claims and their equivalents.

## Claims

1. A handheld gimbal comprising:
a handle part,
a first bracket,
a second bracket,
a third bracket,
a first motor,
a second motor, and
a third motor, the handheld gimbal having a plurality of use modes, and the plurality of use modes corresponding to a plurality of attitudes of the first bracket, wherein:
the first bracket is used to mount a payload, the second bracket is connected between the first bracket and the third bracket, and the third bracket is used to connect with the handle part;
the first motor is installed on the first bracket to connect the first bracket and the second bracket, the first motor being configured to drive the first bracket to rotate for the handheld gimbal to switch between the plurality of use modes;
the second motor is used to connect the second bracket and the third bracket to drive the second bracket to rotate, and the third motor is used to connect the third bracket and the handle part to drive the third bracket to rotate;
when the handle part is substantially in a vertical state, the handle part is tilted counterclockwise or clockwise to rotate the handle part around a roll axis, and the first motor is configured to follow the handle part to rotate to drive the first bracket to rotate around the roll axis; and/or
when the handle part is substantially in a horizontal state, the handle part is tilted counterclockwise or clockwise to rotate the handle part around a yaw axis, and the first motor is configured to follow the handle part to rotate to drive the first bracket to rotate around the yaw axis.

2. The handheld gimbal of claim 1, wherein:
one side of the second motor is installed on the second bracket, and the other side of the second motor is installed on the third bracket for the second motor to drive the second bracket to rotate; and
one side of the third motor is installed on the third bracket, and the other side of the third motor is installed on the handle part for the third motor to drive the third bracket to rotate.

3. The handheld gimbal of claim 1, wherein:
in different use modes, an attitude of the handle part, an attitude of the first bracket, and/or joint angles of the motors of the handheld gimbal are different.

4. The handheld gimbal of claim 1, wherein:
the handheld gimbal is a handheld gimbal with a non-orthogonal structure.

5. The handheld gimbal of claim 1 further comprising:
a first attitude acquisition element, the first attitude acquisition element disposed on the first bracket, the first attitude acquisition element being configured to obtain attitude information of the first bracket.

6. The handheld gimbal of claim 1 further comprising:
a second attitude acquisition element, the second being disposed on the handle part, the second attitude acquisition element being configured to obtain attitude information of the handle part.

7. The handheld gimbal of claim 1, wherein:
when the handheld gimbal is in a first use mode, the handle part is substantially in the vertical state, and a back of the first bracket faces a first direction, the first direction being substantially perpendicular to a current axis direction of the handle part, and the joint angles of the motors of the handheld gimbal all being within a first preset joint angle range.

8. The handheld gimbal of claim 1, wherein:
when the handheld gimbal is in a second use mode, the handle part is substantially in the vertical state, and the back of the first bracket faces a first direction, the first direction being substantially perpendicular to a current axis direction of the handle part, the joint angles of the second motor and the third motor of the handheld gimbal both being within a first preset joint angle range, and the joint angle of the first motor of the handheld gimbal being within a second preset joint angle range.

9. The handheld gimbal of claim 1, wherein:
when the handheld gimbal is in a third use mode, the handle part is substantially in the horizontal state, and the back of the first bracket faces a second direction, the second direction being substantially perpendicular to a current axis direction of the handle part, and the joint angles of the motors of the handheld gimbal all being within a first preset joint angle range.

10. The handheld gimbal of claim 9, wherein:
when the handheld gimbal is in a fourth use mode, the handle part is substantially in the horizontal state, and the back of the first bracket faces a third direction, the third direction being substantially perpendicular to the current axis direction of the handle part, the second direction being substantially opposite to the third direction, and the joint angles of the motors of the handheld gimbal all being within the first preset joint angle range.

11. The handheld gimbal of claim 9, wherein:
when the handheld gimbal is in a fifth use mode, the handle part is substantially in the horizontal state, and the back of the first bracket faces the second direction, the second direction being substantially perpendicular to the current axis direction of the handle part, the joint angles of the second motor and the third motor of the handheld gimbal both being within the first preset joint angle range, and the joint angle of the first motor of the handheld gimbal being within a second preset joint angle range.

12. The handheld gimbal of claim 9, wherein:
when the handheld gimbal is in a sixth use mode, the handle part is substantially in the horizontal state, and the back of the first bracket faces a third direction, the third direction being substantially perpendicular to the current axis direction of the handle part, the second direction being substantially opposite to the third direction, the joint angles of the second motor and the third motor of the handheld gimbal both being within the first preset joint angle range, and the joint angle of the first motor of the handheld gimbal being within a second preset joint angle range.

13. The handheld gimbal of claim 7, wherein:
when the handheld gimbal is in a seventh use mode, the handle part is substantially in a vertically inverted state, and the back of the first bracket faces the first direction, the first direction being substantially perpendicular to the current axis direction of the handle part, and the joint angles of the motors of the handheld gimbal all being within the first preset joint angle range.

14. The handheld gimbal of claim 7, wherein:
when the handheld gimbal is in an eighth use mode, the handle part is substantially in the vertical state, and the back of the first bracket faces the first direction, the first direction being substantially perpendicular to the current axis direction of the handle part, the joint angles of the second motor and the third motor of the handheld gimbal both being within the first preset joint angle range, and the joint angle of the first motor of the handheld gimbal being within a third preset joint angle range.

15. The handheld gimbal of claim 7, wherein:
when the handheld gimbal is in a ninth use mode, the handle part is substantially in a first side-lying state, and the back of the first bracket faces the first direction, the first direction being substantially perpendicular to the current axis direction of the handle part, wherein the handle part in the substantially vertical state is tilted counterclockwise to cause the handle part to be substantially in the first side-lying state when an angle at which the handle part rotates around the roll axis is within a preset angle range.

16. The handheld gimbal of claim 7, wherein:
when the handheld gimbal is in a tenth use mode, the handle part is substantially in a second side-lying state, and the back of the first bracket faces the first direction, the first direction being substantially perpendicular to the current axis direction of the handle part, wherein the handle part in the substantially vertical state is tilted clockwise to cause the handle part to be substantially in the second side-lying state when an angle at which the handle part rotates around the roll axis is within the preset angle range.

17. The handheld gimbal of claim 9, wherein:
when the handheld gimbal is in an eleventh use mode, the handle part is substantially in the first side-lying state, and the back of the first bracket faces the second direction, the second direction being substantially perpendicular to the current axis direction of the handle part.

18. The handheld gimbal of claim 17, wherein:
when the handheld gimbal is in a twelfth use mode, the handle part is substantially in the first side-lying state, and the back of the first bracket faces a third direction, the third direction being substantially perpendicular to the current axis direction of the handle part, and the second direction being substantially opposite to the third direction.

19. The handheld gimbal of claim 7, wherein:
when the handheld gimbal is in a thirteenth use mode, the handle part is substantially in the first side-lying state, and the back of the first bracket faces a fourth direction, the fourth direction being substantially perpendicular to the current axis direction of the handle part, and the fourth direction being substantially opposite to the first direction.

20. The handheld gimbal of claim 19, wherein:
when the handheld gimbal is in a fourteenth use mode, the handle part is substantially in the second side-lying state, and the back of the first bracket faces the second direction, the second direction being substantially perpendicular to the current axis direction of the handle part.

21. The handheld gimbal of claim 20, wherein:
when the handheld gimbal is in a fifteenth use mode, the handle part is substantially in the second side-lying state, and the back of the first bracket faces the third direction, the third direction being substantially perpendicular to the current axis direction of the handle part, and the second direction being substantially opposite to the third direction.

22. The handheld gimbal of claim 19, wherein:
when the handheld gimbal is in a sixteenth use mode, the handle part is substantially in the second side-lying state, and the back of the first bracket faces the fourth direction, the fourth direction being substantially perpendicular to the current axis direction of the handle part, and the fourth direction being substantially opposite to the first direction.

23. The handheld gimbal of any one of claims 1-22 further comprising:
a controller, the controller being configured to control the first motor, the second motor, and the third motor to rotate, and to
obtain a mode switching condition that needs to be met to perform mode switching based on a detected mode switching operation and a current use mode of the handheld gimbal;
determine whether the handheld gimbal meets the mode switching condition; and
control the handheld gimbal to perform a corresponding mode switching event when the handheld gimbal meets the mode switching condition.

24. The handheld gimbal of claim 23, wherein the controller is further configured to:
obtain the use mode and the mode switching operation, and a mapping relationship table between the mode switching condition, the use mode and the mode switching operation having a corresponding relationship with the mode switching condition; and
obtaining the mode switching condition that needs to be met to perform the mode switching based on the mode switching operation, the current use mode of the handheld gimbal, and the mapping relationship table.

25. The handheld gimbal of claim 23, wherein the controller is further configured to:
obtain current attitude information of the handle part, current attitude information of the first bracket, and/or current joint angles of the motors of the handheld gimbal; and
determine whether the handheld gimbal meets the mode switching condition based on the current attitude information of the handle part, the current attitude information of the first bracket, and/or the joint angles of the motors of the handheld gimbal.

26. The handheld gimbal of claim 25, wherein the controller is further configured to:
obtain a first attitude condition, a second attitude condition, and a joint angle condition that the handle part, the first bracket, and/or the motors of the handheld gimbal need to meet respectively from the mode switching condition;
determine whether the current attitude of the handle part meets the first attitude condition based on the current attitude information of the handle part; and/or
determine whether the current attitude of the first bracket meets the second attitude condition based on the current attitude information of the first bracket; and/or
determine whether the current joint angles of the motors of the handheld gimbal meet the joint angle condition based on the current joint angles of the motors of the handheld gimbal; and
determine whether the handheld gimbal meets the mode switching condition based on a determination result of the handle part, a determination result of the first bracket, and/or a determination result of the motors of the handheld gimbal.

27. The handheld gimbal of claim 23, wherein the controller is further configured to:
control the handheld gimbal to be in a first control mode when the handheld gimbal is in a power-on state.

28. A gimbal control method applied to a handheld gimbal, the handheld gimbal including a handle part, a first bracket, a second bracket, a third bracket, a first motor, a second motor, and a third motor, the handheld gimbal including a plurality of use modes, the plurality of use modes respectively corresponding to a plurality of attitudes of the first bracket, the first bracket being configured to mount a payload, the second bracket being connected between the first bracket and the third bracket, the third bracket being connected with the handle part, the first motor being installed on the first bracket to connect the first bracket and the second bracket to drive the first bracket to rotate for the handheld gimbal to switch between the plurality of use modes, the second motor being used to connect the second bracket and the third bracket to drive the second bracket to rotate, the third motor being used to connect the third bracket and the handle part to drive the third bracket to rotate, when the handle part is substantially in a vertical state, the handle part being configured to tilt counterclockwise or clockwise to rotate the handle part around a roll axis, and the first motor being configured to follow the handle part to rotate to drive the first bracket to rotate around the roll axis; and/or when the handle part is substantially in a horizontal state, the handle part being configured to tilt counterclockwise or clockwise to rotate the handle part around a yaw axis, and the first motor being configured to follow the handle part to rotate to drive the first bracket to rotate around the yaw axis, comprising:
determining a to-be-followed object of the first bracket based on a current use mode of the handheld gimbal, wherein an attitude of the first bracket changes following a change of an attitude of the to-be-followed object;
determining an expected attitude angle of the first bracket based on a current attitude angle of the to-be-followed object if the attitude of the to-be-followed object changes; and
adjusting an attitude angle of the first bracket until the adjusted attitude angle of the first bracket is the expected attitude angle based on a current attitude angle and the expected attitude angle of the first bracket.

29. The gimbal control method of claim 28, wherein determining the to-be-followed object of the first bracket based on the current use mode of the handheld gimbal includes:
an determining a mode type to which the current use mode belongs; and
determining the to-be-followed object of the first bracket based on the mode type, the to-be-followed object being one of the handle part, the second bracket, and the third bracket of the handheld gimbal.

30. The gimbal control method of claim 29, wherein determining the mode type to which the current use mode belongs includes:
obtaining a mode identifier corresponding to the current use mode, and determining an identifier set to which the mode identifier belongs;
obtaining a preset mapping relationship table between the mode type of the identifier set, the mode type and the identifier set having a corresponding relationship; and
determining the mode type to which the current use mode belongs based on the identifier set and the mapping relationship table.

31. The gimbal control method of claim 28, wherein determining the expected attitude angle of the first bracket based on the current attitude angle of the to-be-followed object includes:
calculating a difference between the current attitude angle of the to-be-followed object and a historical attitude angle, the historical attitude angle being an attitude angle of the to-be-followed object at a previous time;
determining an attitude angle coefficient based on the difference between the current attitude angle of the to-be-followed object and the historical attitude angle; and
determining the expected attitude angle of the first bracket based on the attitude angle coefficient and the difference between the current attitude angle of the to-be-followed object and the historical attitude angle.

32. The gimbal control method of any one of claims 28-32, wherein adjusting the attitude angle of the first bracket based on the current attitude angle and the expected attitude angle of the first bracket until the adjusted attitude angle of the first bracket is the expected attitude angle includes:
determining an attitude deviation value of the first bracket based on the current attitude angle and the expected attitude angle of the first bracket, and generating an attitude adjustment instruction of the first bracket based on the attitude deviation value; and
adjusting the attitude angle of the first bracket until the adjusted attitude angle of the first bracket is the expected attitude angle based on the attitude adjustment instruction.

33. The gimbal control method of claim 32, wherein adjusting the attitude angle of the first bracket until the adjusted attitude angle of the first bracket is the expected attitude angle based on the attitude adjustment instruction includes:
determining whether a difference between the expected attitude angle and the adjusted attitude angle of the first bracket is greater than a preset threshold at a preset time interval when adjusting the attitude angle of the first bracket;
updating the attitude adjustment instruction based on the difference if the different is greater than the preset threshold, and adjusting the attitude angle of the first bracket based on the updated attitude adjustment instruction; and
determining that the adjusted attitude angle of the first bracket is the expected attitude angle if the difference is less than or equal to the preset threshold.

34. The gimbal control method of claim 28, wherein:
one side of the second motor is installed on the second bracket, and the other side of the second motor is installed on the third bracket for the second motor to drive the second bracket to rotate; and
one side of the third motor is installed on the third bracket, and the other side of the third motor is installed on the handle part for the third motor to drive the third bracket to rotate.

35. The gimbal control method of claim 28, wherein:
the handheld gimbal is a handheld gimbal with a non-orthogonal structure.

36. The gimbal control method of claim 28, wherein:
the handheld gimbal further includes a first attitude acquisition element, the first attitude acquisition element disposed on the first bracket, the first attitude acquisition element being configured to obtain attitude information of the first bracket.

37. The gimbal control method of claim 28, wherein:
the handheld gimbal further includes a second attitude acquisition element, the second being disposed on the handle part, the second attitude acquisition element being configured to obtain attitude information of the handle part.

38. The gimbal control method of any one of claims 28-31, wherein:
an attitude of the handle part, the attitude of the first bracket, and/or joint angles of the motors of the handheld gimbal are different in different use modes.

39. The gimbal control method of claim 38 further comprising:
controlling the handheld gimbal to be in a first control mode when the handheld gimbal is in a power-on state, wherein:
when the handheld gimbal is in a first use mode, the handle part is in the vertical state, a back of the first bracket faces a first direction, the first direction being substantially perpendicular to a current axis direction of the handle part, the joint angles of the motors of the handheld gimbal all being within a first preset joint angle range.

40. The gimbal control method of claim 38, wherein:
when the handheld gimbal is in a second use mode, the handle part is substantially in the vertical state, and the back of the first bracket faces the first direction, the first direction being substantially perpendicular to the current axis direction of the handle part, the joint angles of the second motor and the third motor of the handheld gimbal both being within the first preset joint angle range, and the joint angle of the first motor of the handheld gimbal being within a second preset joint angle range.

41. The gimbal control method of claim 38, wherein:
when the handheld gimbal is in a third use mode, the handle part is substantially in the horizontal state, and the back of the first bracket faces a second direction, the second direction being substantially perpendicular to the current axis direction of the handle part, and the joint angles of the motors of the handheld gimbal all being with the first preset joint angle range.

42. The gimbal control method of claim 41, wherein:
when the handheld gimbal is in a fourth use mode, the handle part is substantially in the horizontal state, and the back of the first bracket faces a third direction, the third direction being substantially perpendicular to the current axis direction of the handle part, the second direction being substantially opposite to the third direction, and the joint angles of the motors of the handheld gimbal all being with the first preset joint angle range.

43. The gimbal control method of claim 41, wherein:
when the handheld gimbal is in a fifth use mode, the handle part is substantially in the horizontal state, and the back of the first bracket faces the second direction, the second direction being substantially perpendicular to the current axis direction of the handle part, the joint angles of the second motor and the third motor of the handheld gimbal both being within the first preset joint angle range, and the joint angle of the first motor of the handheld gimbal being within the second preset joint angle range.

44. The gimbal control method of claim 41, wherein:
when the handheld gimbal is in a sixth use mode, the handle part is substantially in the horizontal state, and the back of the first bracket faces the third direction, the third direction being substantially perpendicular to the current axis direction of the handle part, the second direction being substantially opposite to the third direction, the joint angles of the second motor and the third motor of the handheld gimbal both being within the first preset joint angle range, and the joint angle of the first motor of the handheld gimbal being within the second preset joint angle range.

45. The gimbal control method of claim 39, wherein:
when the handheld gimbal is in a seventh use mode, the handle part is substantially in a vertically inverted state, and the back of the first bracket faces the first direction, the first direction being substantially perpendicular to the current axis direction of the handle part, and the joint angles of the motors of the handheld gimbal all being with the first preset joint angle range.

46. The gimbal control method of claim 39, wherein:
when the handheld gimbal is in an eighth use mode, the handle part is substantially in the vertical state, and the back of the first bracket faces the first direction, the first direction being substantially perpendicular to the current axis direction of the handle part, the joint angles of the second motor and the third motor of the handheld gimbal both being with the first preset joint angle range, and the joint angle of the first motor of the handheld gimbal being within a third preset joint angle range.

47. The gimbal control method of claim 39, wherein:
when the handheld gimbal is in a ninth use mode, the handle part is substantially in a first side-lying state, and the back of the first bracket faces the first direction, the first direction being substantially perpendicular to the current axis direction of the handle part, wherein the handle part in the substantially vertical state is tilted counterclockwise to cause the handle part to be substantially in the first side-lying state when an angle at which the handle part rotates around the roll axis is within a preset angle range.

48. The gimbal control method of claim 39, wherein:
when the handheld gimbal is in a tenth use mode, the handle part is substantially in a second side-lying state, and the back of the first bracket faces the first direction, the first direction being substantially perpendicular to the current axis direction of the handle part, wherein the handle part in the substantially vertical state is tilted clockwise to cause the handle part to be substantially in the second side-lying state when an angle at which the handle part rotates around the roll axis is within the preset angle range.

49. The gimbal control method of claim 48, wherein:
when the handheld gimbal is in an eleventh use mode, the handle part is substantially in the first side-lying state, and the back of the first bracket faces the second direction, the second direction being substantially perpendicular to the current axis direction of the handle part.

50. The gimbal control method of claim 49, wherein:
when the handheld gimbal is in a twelfth use mode, the handle part is substantially in the first side-lying state, and the back of the first bracket faces the third direction, the third direction being substantially perpendicular to the current axis direction of the handle part, and the second direction being substantially opposite to the third direction.

51. The gimbal control method of claim 39, wherein:
when the handheld gimbal is in a thirteenth use mode, the handle part is substantially in the first side-lying state, and the back of the first bracket faces a fourth direction, the fourth direction being substantially perpendicular to the current axis direction of the handle part, and the fourth direction being substantially opposite to the first direction.

52. The gimbal control method of claim 48, wherein:
when the handheld gimbal is in a fourteenth use mode, the handle part is substantially in the second side-lying state, and the back of the first bracket faces the second direction, the second direction being substantially perpendicular to the current axis direction of the handle part.

53. The gimbal control method of claim 52, wherein:
when the handheld gimbal is in a fifteenth use mode, the handle part is substantially in the second side-lying state, and the back of the first bracket faces the third direction, the third direction being substantially perpendicular to the current axis direction of the handle part, and the second direction being substantially opposite to the third direction.

54. The gimbal control method of claim 51, wherein:
when the handheld gimbal is in a sixteenth use mode, the handle part is substantially in the second side-lying state, and the back of the first bracket faces the fourth direction, the fourth direction being substantially perpendicular to the current axis direction of the handle part, and the fourth direction being substantially opposite to the first direction.

55. A handheld gimbal, the handheld gimbal including a handle part, a first bracket, a second bracket, a third bracket, a first motor, a second motor, a third motor, and at least one controller, the handheld gimbal including a plurality of use modes, the plurality of use modes respectively corresponding to a plurality of attitudes of the first bracket, the first bracket being configured to mount a payload, the second bracket being connected between the first bracket and the third bracket, the third bracket being connected with the handle part, the first motor being installed on the first bracket to connect the first bracket and the second bracket to drive the first bracket to rotate for the handheld gimbal to switch between the plurality of use modes, the second motor being used to connect the second bracket and the third bracket to drive the second bracket to rotate, the third motor being used to connect the third bracket and the handle part to drive the third bracket to rotate, when the handle part is substantially in a vertical state, the handle part being configured to tilt counterclockwise or clockwise to rotate the handle part around a roll axis, and the first motor being configured to follow the handle part to rotate to drive the first bracket to rotate around the roll axis; and/or when the handle part is substantially in a horizontal state, the handle part being configured to tilt counterclockwise or clockwise to rotate the handle part around a yaw axis, and the first motor being configured to follow the handle part to rotate to drive the first bracket to rotate around the yaw axis, the controller being configured to:
determine a to-be-followed object of the first bracket based on a current use mode of the handheld gimbal, wherein an attitude of the first bracket changes following a change of an attitude of the to-be-followed object;
determine an expected attitude angle of the first bracket based on a current attitude angle of the to-be-followed object if the attitude of the to-be-followed object changes; and
adjust an attitude angle of the first bracket until the adjusted attitude angle of the first bracket is the expected attitude angle based on a current attitude angle and the expected attitude angle of the first bracket.

56. The handheld gimbal of claim 55, wherein when determining the to-be-followed object of the first bracket based on the current use mode of the handheld gimbal, the controller is configured to:
determine a mode type to which the current use mode belongs; and
determine the to-be-followed object of the first bracket based on the mode type, the to-be-followed object being one of the handle part, the second bracket, and the third bracket of the handheld gimbal.

57. The handheld gimbal of claim 56, wherein when determining the mode type to which the current use mode belongs, the controller is configured to:
obtain a mode identifier corresponding to the current use mode, and determining an identifier set to which the mode identifier belongs;
obtain a preset mapping relationship table between the mode type of the identifier set, the mode type and the identifier set having a corresponding relationship; and
determine the mode type to which the current use mode belongs based on the identifier set and the mapping relationship table.

58. The handheld gimbal of claim 55, wherein when determining the expected attitude angle of the first bracket based on the current attitude angle of the to-be-followed object, the controller is configured to:
calculate a difference between the current attitude angle of the to-be-followed object and a historical attitude angle, the historical attitude angle being an attitude angle of the to-be-followed object at a previous time;
determine an attitude angle coefficient based on the difference between the current attitude angle of the to-be-followed object and the historical attitude angle; and
determine the expected attitude angle of the first bracket based on the attitude angle coefficient and the difference between the current attitude angle of the to-be-followed object and the historical attitude angle.

59. The handheld gimbal of any one of claims 55-58, wherein when adjusting the attitude angle of the first bracket based on the current attitude angle and the expected attitude angle of the first bracket until the adjusted attitude angle of the first bracket is the expected attitude angle, the controller is configured to:
determine an attitude deviation value of the first bracket based on the current attitude angle and the expected attitude angle of the first bracket, and generate an attitude adjustment instruction of the first bracket based on the attitude deviation value; and
adjust the attitude angle of the first bracket until the adjusted attitude angle of the first bracket is the expected attitude angle based on the attitude adjustment instruction.

60. The handheld gimbal of claim 59, wherein when adjusting the attitude angle of the first bracket until the adjusted attitude angle of the first bracket is the expected attitude angle based on the attitude adjustment instruction, the controller is configured to:
determine whether a difference between the expected attitude angle and the adjusted attitude angle of the first bracket is greater than a preset threshold at a preset time interval when adjusting the attitude angle of the first bracket;
update the attitude adjustment instruction based on the difference if the different is greater than the preset threshold, and adjust the attitude angle of the first bracket based on the updated attitude adjustment instruction; and
determine that the adjusted attitude angle of the first bracket is the expected attitude angle if the difference is less than or equal to the preset threshold.

61. The handheld gimbal of claim 55, wherein:
one side of the second motor is installed on the second bracket, and the other side of the second motor is installed on the third bracket for the second motor to drive the second bracket to rotate; and
one side of the third motor is installed on the third bracket, and the other side of the third motor is installed on the handle part for the third motor to drive the third bracket to rotate.

62. The handheld gimbal of claim 55, wherein:
the handheld gimbal is a handheld gimbal with a non-orthogonal structure.

63. The handheld gimbal of claim 55 further comprising:
a first attitude acquisition element, the first attitude acquisition element disposed on the first bracket, the first attitude acquisition element being configured to obtain attitude information of the first bracket.

64. The handheld gimbal of claim 55 further comprising:
a second attitude acquisition element, the second being disposed on the handle part, the second attitude acquisition element being configured to obtain attitude information of the handle part.

65. The handheld gimbal of any one of claims 55-58, wherein:
an attitude of the handle part, the attitude of the first bracket, and/or joint angles of the motors of the handheld gimbal are different in different use modes.

66. The handheld gimbal of claim 65, wherein the controller is further configured to:
control the handheld gimbal to be in a first control mode when the handheld gimbal is in a power-on state; and
when the handheld gimbal is in a first use mode, the handle part is in the vertical state, a back of the first bracket faces a first direction, the first direction being substantially perpendicular to a current axis direction of the handle part, the joint angles of the motors of the handheld gimbal all being within a first preset joint angle range.

67. The handheld gimbal of claim 65, wherein:
when the handheld gimbal is in a second use mode, the handle part is substantially in the vertical state, and the back of the first bracket faces the first direction, the first direction being substantially perpendicular to the current axis direction of the handle part, the joint angles of the second motor and the third motor of the handheld gimbal both being within the first preset joint angle range, and the joint angle of the first motor of the handheld gimbal being within a second preset joint angle range.

68. The handheld gimbal of claim 65, wherein:
when the handheld gimbal is in a third use mode, the handle part is substantially in the horizontal state, and the back of the first bracket faces a second direction, the second direction being substantially perpendicular to the current axis direction of the handle part, and the joint angles of the motors of the handheld gimbal all being with the first preset joint angle range.

69. The handheld gimbal of claim 68, wherein:
when the handheld gimbal is in a fourth use mode, the handle part is substantially in the horizontal state, and the back of the first bracket faces a third direction, the third direction being substantially perpendicular to the current axis direction of the handle part, the second direction being substantially opposite to the third direction, and the joint angles of the motors of the handheld gimbal all being with the first preset joint angle range.

70. The handheld gimbal of claim 68, wherein:
when the handheld gimbal is in a fifth use mode, the handle part is substantially in the horizontal state, and the back of the first bracket faces the second direction, the second direction being substantially perpendicular to the current axis direction of the handle part, the joint angles of the second motor and the third motor of the handheld gimbal both being within the first preset joint angle range, and the joint angle of the first motor of the handheld gimbal being within the second preset joint angle range.

71. The handheld gimbal of claim 68, wherein:
when the handheld gimbal is in a sixth use mode, the handle part is substantially in the horizontal state, and the back of the first bracket faces the third direction, the third direction being substantially perpendicular to the current axis direction of the handle part, the second direction being substantially opposite to the third direction, the joint angles of the second motor and the third motor of the handheld gimbal both being within the first preset joint angle range, and the joint angle of the first motor of the handheld gimbal being within the second preset joint angle range.

72. The handheld gimbal of claim 66, wherein:
when the handheld gimbal is in a seventh use mode, the handle part is substantially in a vertically inverted state, and the back of the first bracket faces the first direction, the first direction being substantially perpendicular to the current axis direction of the handle part, and the joint angles of the motors of the handheld gimbal all being with the first preset joint angle range.

73. The handheld gimbal of claim 66, wherein:
when the handheld gimbal is in an eighth use mode, the handle part is substantially in the vertical state, and the back of the first bracket faces the first direction, the first direction being substantially perpendicular to the current axis direction of the handle part, the joint angles of the second motor and the third motor of the handheld gimbal both being with the first preset joint angle range, and the joint angle of the first motor of the handheld gimbal being within a third preset joint angle range.

74. The handheld gimbal of claim 66, wherein:
when the handheld gimbal is in a ninth use mode, the handle part is substantially in a first side-lying state, and the back of the first bracket faces the first direction, the first direction being substantially perpendicular to the current axis direction of the handle part, wherein the handle part in the substantially vertical state is tilted counterclockwise to cause the handle part to be substantially in the first side-lying state when an angle at which the handle part rotates around the roll axis is within a preset angle range.

75. The handheld gimbal of claim 66, wherein:
when the handheld gimbal is in a tenth use mode, the handle part is substantially in a second side-lying state, and the back of the first bracket faces the first direction, the first direction being substantially perpendicular to the current axis direction of the handle part, wherein the handle part in the substantially vertical state is tilted clockwise to cause the handle part to be substantially in the second side-lying state when an angle at which the handle part rotates around the roll axis is within the preset angle range.

76. The handheld gimbal of claim 75, wherein:
when the handheld gimbal is in an eleventh use mode, the handle part is substantially in the first side-lying state, and the back of the first bracket faces the second direction, the second direction being substantially perpendicular to the current axis direction of the handle part.

77. The handheld gimbal of claim 76, wherein:
when the handheld gimbal is in a twelfth use mode, the handle part is substantially in the first side-lying state, and the back of the first bracket faces the third direction, the third direction being substantially perpendicular to the current axis direction of the handle part, and the second direction being substantially opposite to the third direction.

78. The handheld gimbal of claim 66, wherein:
when the handheld gimbal is in a thirteenth use mode, the handle part is substantially in the first side-lying state, and the back of the first bracket faces a fourth direction, the fourth direction being substantially perpendicular to the current axis direction of the handle part, and the fourth direction being substantially opposite to the first direction.

79. The handheld gimbal of claim 78, wherein:
when the handheld gimbal is in a fourteenth use mode, the handle part is substantially in the second side-lying state, and the back of the first bracket faces the second direction, the second direction being substantially perpendicular to the current axis direction of the handle part.

80. The handheld gimbal of claim 79, wherein:
when the handheld gimbal is in a fifteenth use mode, the handle part is substantially in the second side-lying state, and the back of the first bracket faces the third direction, the third direction being substantially perpendicular to the current axis direction of the handle part, and the second direction being substantially opposite to the third direction.

81. The handheld gimbal of claim 78, wherein:
when the handheld gimbal is in a sixteenth use mode, the handle part is substantially in the second side-lying state, and the back of the first bracket faces the fourth direction, the fourth direction being substantially perpendicular to the current axis direction of the handle part, and the fourth direction being substantially opposite to the first direction.

82. A computer-readable storage medium comprising:
a computer program stored in the computer-readable storage medium, when the computer program is executed by a processor, the processor realizes the gimbal control method according to any one of claims 28 to 54.
